# EUROPEAN PATENT APPLICATION

(11) **EP 4 333 338 A1**
(43) Date of publication of application: **06.03.2024**
(21) Application number: 22823879.6
(22) Date of filing: 11.04.2022
(51) Int. Cl.: H04L 1/16

(54) **DATA RETRANSMISSION METHOD, NAV VALUE CONTROL METHOD, ELECTRONIC DEVICE, AND STORAGE MEDIUM**

(30) Priority: 16.06.2021 CN 202110667330
(71) Applicant: Huawei Technologies Co., Ltd., Shenzhen, Guangdong 518129 (CN)
(72) Inventor: HOU, Guoshuai, Xi'an, Shaanxi 710071 (CN); LI, Hongyan, Xi'an, Shaanxi 710071 (CN); MA, Jianpeng, Xi'an, Shaanxi 710071 (CN); ZHANG, Shun, Xi'an, Shaanxi 710071 (CN); HAN, Huan, Xi'an, Shaanxi 710071 (CN); DU, Zhenguo, Shenzhen, Guangdong 518129 (CN); LI, Xiaoxian, Shenzhen, Guangdong 518129 (CN)
(74) Representative: Pfenning, Meinig & Partner mbB
(86) International application number: PCT/CN2022/086115
(87) International publication number: WO 2022/262390

(57) **Abstract**

This application belongs to the field of wireless communication technologies, and specifically discloses a data retransmission method, a network allocation vector (Network Allocation Vector, NAV) value control method, an electronic device, and a storage medium. The method includes: sending a data frame to a second electronic device and receiving an acknowledgement frame from the second electronic device within transmission opportunity (Transmission OPportunity, TXOP) duration, where the acknowledgement frame includes first acknowledgement information; and when the first acknowledgement information indicates that at least a part of data in the data frame needs to be retransmitted and indicates a retransmission period required to complete the retransmission, retransmitting information related to the at least a part of data to the second electronic device in the retransmission period. In this application, time that needs to be occupied by re-contending for a channel to obtain an opportunity of retransmitting data is omitted, and another station in a communication system is also accurately notified in advance of time to be occupied by retransmitting the data, so that the another station can remain silent and does not interfere with work of an AP.

## Description

This application claims priority to Chinese Patent Application No. 202110667330.6, filed with the China National Intellectual Property Administration on June 16, 2021 and entitled "DATA RETRANSMISSION METHOD, NAV VALUE CONTROL METHOD, ELECTRONIC DEVICE, AND STORAGE MEDIUM", which is incorporated herein by reference in its entirety.

### TECHNICAL FIELD

This application relates to the field of wireless communication technologies, and in particular, to a data retransmission method, a network allocation vector (Network Allocation Vector, NAV) value control method, an electronic device, and a storage medium.

### BACKGROUND

With the development of wireless local area network (Wireless Local Area Network, WLAN) technologies, the IEEE 802.11 working group has started research and development of a next-generation wireless communication technology (Wi-Fi) standard. The next-generation Wi-Fi standard is briefly referred to as EHT (Extremely High Throughput, extremely high throughput), with a project code IEEE 802. 11be, and aims to further increase a system capacity (for example, increase the system capacity to 30 Gbps), to meet requirements of emerging traffic services such as an augmented reality (Augmented Reality, AR) service and an ultra-high definition video service.

In the next-generation Wi-Fi standard, because a higher modulation order is used at a physical layer, a transmission rate at the physical layer may be substantially higher. Low protocol efficiency of an existing medium access control (Medium Access Control, MAC) layer becomes an important factor that limits expansion of a system throughput. To effectively improve protocol efficiency of the MAC layer, in the next-generation Wi-Fi standard, a hybrid automatic repeat request (Hybrid automatic repeat request, HARQ) technology is planned to be incorporated into the standard as a reliable transmission solution, to improve system transmission efficiency by reducing a quantity of times of retransmitting an incorrect data frame.

### SUMMARY

To resolve the foregoing disadvantages and further improve a data throughput of a wireless communication system, this application provides a new data retransmission method, a network allocation vector (Network Allocation Vector, NAV) value control method, an electronic device, and a storage medium.

According to some embodiments of this application, this application discloses a data retransmission method for a first electronic device, including:
sending a data frame to a second electronic device and receiving an acknowledgement frame from the second electronic device within transmission opportunity (Transmission OPportunity, TXOP) duration, where the acknowledgement frame includes first acknowledgement information; and
when the first acknowledgement information indicates that at least a part of data in the data frame needs to be retransmitted and indicates a retransmission period required to complete the retransmission, retransmitting information related to the at least a part of data to the second electronic device in the retransmission period.

In the foregoing data retransmission method, the transmission opportunity duration is adjacent to the retransmission period.

In the foregoing data retransmission method, the transmission opportunity duration ends when the first electronic device completes receiving of the first acknowledgement information from the second electronic device, and the retransmission period starts when the first electronic device receives the first acknowledgement information from the second electronic device.

In the foregoing data retransmission method, the information related to the at least a part of data includes at least the at least a part of data or a redundancy version of the at least a part of data.

In the foregoing data retransmission method, the retransmitting information related to the at least a part of data to the second electronic device in the retransmission period includes: sending the information related to the at least a part of data to the second electronic device since a start moment of the retransmission period and after at least one interframe space.

In the foregoing data retransmission method, the retransmission period includes:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

In the foregoing data retransmission method, the first acknowledgement information is included in a first block acknowledgement (Block Acknowledge, BA) frame that complies with the IEEE 802.11 standard.

In the foregoing data retransmission method, the retransmission period is included in a duration field of the first block acknowledgement frame.

In the foregoing data retransmission method, the first block acknowledgement frame includes indication information used to specify the at least a part of data, or indication information used to specify the redundancy version (Redundancy Version, RV) of the at least a part of data.

In the foregoing data retransmission method, the indication information includes an index pointing to the at least a part of data or the redundancy version.

Compared with the conventional technology, in the foregoing data retransmission method for a first electronic device, a dynamic retransmission period is added immediately following the TXOP duration. This not only omits time that needs to be occupied by re-contending for a channel to obtain an opportunity of retransmitting data, but also accurately notifies in advance another station in the communication system of time to be occupied by retransmitting the data, so that the another station can remain silent and does not interfere with work of an AP. In addition, fast and accurate data transmission reduces data buffering pressure of each station.

According to some embodiments of this application, this application discloses a data retransmission method for a second electronic device, including:
receiving a data frame from a first electronic device within transmission opportunity (Transmission OPportunity, TXOP) duration;
when determining that at least a part of data in the data frame needs to be retransmitted, calculating a retransmission period required to complete the retransmission;
sending an acknowledgement frame to the first electronic device, where the acknowledgement frame includes first acknowledgement information to indicate that the at least a part of data needs to be retransmitted and indicate the retransmission period; and
receiving, in the retransmission period, information that is related to the at least a part of data and that is from the first electronic device.

In the foregoing data retransmission method, the transmission opportunity duration is adjacent to the retransmission period.

In the foregoing data retransmission method, the transmission opportunity duration ends when the first electronic device receives the first acknowledgement information from the second electronic device, and the retransmission period starts when the first electronic device receives the first acknowledgement information from the second electronic device.

In the foregoing data retransmission method, the receiving, in the retransmission period, information that is related to the at least a part of data and that is from the first electronic device includes: receiving, since a start moment of the retransmission period and after at least one interframe space, the information that is related to the at least a part of data and that is from the first electronic device.

In the foregoing data retransmission method, the information related to the at least a part of data includes at least the at least a part of data or a redundancy version of the at least a part of data.

In the foregoing data retransmission method, the retransmission period includes:
duration required for the second electronic device to receive the information that is related to the at least a part of data and that is sent by the first electronic device;
duration required for the second electronic device to send second acknowledgement information to the first electronic device based on the information that is related to the at least a part of data and that is from the first electronic device; and
at least two interframe spaces.

In the foregoing data retransmission method, the first acknowledgement information is included in a first block acknowledgement (Block Acknowledge, BA) frame that complies with the IEEE 802.11 standard.

In the foregoing data retransmission method, the retransmission period is included in a duration field of the first block acknowledgement frame.

In the foregoing data retransmission method, the first block acknowledgement frame includes indication information used to specify the at least a part of data, or indication information used to specify the redundancy version (Redundancy Version, RV) of the at least a part of data.

In the foregoing data retransmission method, the indication information includes an index pointing to the at least a part of data or the redundancy version.

Compared with the conventional technology, in the foregoing data retransmission method for a second electronic device, in addition to performing operations such as decoding and checking the received data frame, the second electronic device further calculates the duration (the retransmission period) required to retransmit the part of data that needs to be retransmitted, and writes the duration into the duration field of the acknowledgement frame. Because all other stations in a same communication system can read the duration field of the acknowledgement frame, addition of the retransmission period into the acknowledgement frame serves as a notification, that is, notifying the other stations that data transmission between the first electronic device and the second electronic device is to continue and duration thereof is the retransmission period. Therefore, the TXOP duration between the first electronic device and the second electronic device is substantially prolonged.

According to some embodiments of this application, this application discloses a network allocation vector (Network Allocation Vector, NAV) value control method for a third electronic device, including:
receiving an RTS (Request to Send, request to send) from a first electronic device, and comparing a first period in a duration field of the RTS with an NAV value of the third electronic device;
updating the NAV value to the first period when the first period is greater than the NAV value;
receiving an acknowledgement frame from a second electronic device, where the acknowledgement frame includes first acknowledgement information; and
when the first acknowledgement information indicates that at least a part of data in a data frame sent by the first electronic device to the second electronic device needs to be retransmitted and indicates a retransmission period required to complete the retransmission, comparing the retransmission period with the NAV value, and updating the NAV value to the retransmission period when the retransmission period is greater than the NAV value.

In the foregoing NAV value control method, the first acknowledgement information is included in a first block acknowledgement (Block Acknowledge, BA) frame that complies with the IEEE 802.11 standard, and the retransmission period is included in a duration field of the first block acknowledgement frame.

In the foregoing NAV value control method, the retransmission period includes:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

In the foregoing NAV value control method, the first period includes a period required, after RTS transmission, for the first electronic device to complete sending of the data frame to the second electronic device and for the second electronic device to complete sending of the first acknowledgement information to the first electronic device.

Compared with the conventional technology, in the foregoing network allocation vector (Network Allocation Vector, NAV) value control method for a third electronic device, the third electronic device listens to the RTS frame sent by the first electronic device and the acknowledgement frame sent by the second electronic device, and reads duration fields of the RTS frame and the acknowledgement frame, to adjust the NAV value of the third electronic device. The NAV value may be used to manage a silent period of the third electronic device, so that the third electronic device continues to remain silent in the foregoing retransmission period.

According to some embodiments of this application, this application further discloses a network allocation vector (Network Allocation Vector, NAV) value control method for a fourth electronic device, including:
receiving a CTS (Clear to Send, clear to send) from a second electronic device, and comparing a second period in a duration field of the CTS with an NAV value of the fourth electronic device;
updating the NAV value to the second period when the second period is greater than the NAV value;
receiving an acknowledgement frame from a second electronic device, where the acknowledgement frame includes first acknowledgement information; and
when the first acknowledgement information indicates that at least a part of data in a data frame sent by a first electronic device to the second electronic device needs to be retransmitted and indicates a retransmission period required to complete the retransmission, comparing the retransmission period with the NAV value, and updating the NAV value to the retransmission period when the retransmission period is greater than the NAV value.

In the foregoing NAV value control method, the first acknowledgement information is included in a first block acknowledgement (Block Acknowledge, BA) frame that complies with the IEEE 802.11 standard, and the retransmission period is included in a duration field of the first block acknowledgement frame.

In the foregoing NAV value control method, the retransmission period includes:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

In the foregoing NAV value control method, the second period includes a period required, after CTS transmission, for the first electronic device to complete sending of the data frame to the second electronic device and for the second electronic device to complete sending of the first acknowledgement information to the first electronic device.

Compared with the conventional technology, in the foregoing network allocation vector (Network Allocation Vector, NAV) value control method for a fourth electronic device, the fourth electronic device listens to the CTS frame and the acknowledgement frame that are sent by the second electronic device, and reads duration fields of the CTS frame and the acknowledgement frame, to adjust the NAV value of the fourth electronic device. The NAV value may be used to manage a silent period of the fourth electronic device, so that the fourth electronic device continues to remain silent in the foregoing retransmission period.

According to some embodiments, this application further discloses an electronic device, including a memory and a processor, where the memory is configured to store instructions executed by one or more processors, and the processor is one of processors of the electronic device, and is configured to perform one or more of the foregoing methods.

According to some embodiments, this application further discloses a computer-readable storage medium, where the storage medium is configured to store computer instructions, and when the computer instructions are executed, one or more of the foregoing methods are implemented.

In conclusion, compared with the conventional technology, the technical solutions provided in this application can greatly improve a data throughput of a wireless communication system.

### BRIEF DESCRIPTION OF DRAWINGS

FIG. 1 is a schematic diagram of a wireless communication system according to some embodiments of this application;
FIG. 2 is a transmission time sequence diagram of transmitting data and retransmitting data according to an automatic repeat request (Automatic repeat request, ARQ) protocol in the conventional technology;
FIG. 3 is a time sequence diagram of transmitting data within a transmission opportunity (Transmission OPportunity, TXOP) period according to a hybrid automatic repeat request (Hybrid Automatic repeat request, HARQ) protocol in the conventional technology;
FIG. 4 is a time sequence diagram of retransmitting data by reserving retransmission time in a TXOP according to a HARQ protocol in the conventional technology;
FIG. 5 is a time sequence diagram of retransmitting data by re-contending for a channel according to a HARQ protocol in the conventional technology;
FIG. 6 is a time sequence diagram of retransmitting data by dynamically prolonging TXOP duration in a chase combining (Chase Combining, CC) mode according to some embodiments of this application;
FIG. 7 is a time sequence diagram of retransmitting data by dynamically prolonging TXOP duration in an incremental redundancy (Incremental Redundancy, IR) mode according to some embodiments of this application;
FIG. 8 is a schematic diagram of a frame structure of an acknowledgement frame in FIG. 6 or FIG. 7 according to some embodiments of this application;
FIG. 9 is a schematic diagram of a working process for a first electronic device, a second electronic device, a third electronic device, and a fourth electronic device in the wireless communication system in FIG. 1 in a retransmission mechanism in which TXOP duration is dynamically prolonged according to some embodiments of this application;
FIG. 10 is a flowchart of a retransmission method for dynamically prolonging a TXOP by a first electronic device according to some embodiments of this application;
FIG. 11 is a flowchart of a retransmission method for dynamically prolonging a TXOP by a second electronic device according to some embodiments of this application;
FIG. 12A and FIG. 12B are a flowchart of controlling, by a third electronic device, a local NAV value to dynamically prolong TXOP duration according to some embodiments of this application;
FIG. 13A and FIG. 13B are a flowchart of controlling, by a fourth electronic device, a local NAV value to dynamically prolong TXOP duration according to some embodiments of this application; and
FIG. 14 is a schematic diagram of a system of an electronic device according to some embodiments of this application.

### DESCRIPTION OF EMBODIMENTS

The following describes implementations of this application by using specific embodiments. A person skilled in the art may easily learn of other advantages and effects of this application based on content disclosed in this specification. Although the descriptions of this application are presented in conjunction with certain embodiments, this does not mean that features of the present invention are limited only to the implementations. On the contrary, a purpose of describing the present invention in conjunction with the implementations is to cover other options or modifications that may be derived based on the claims of this application. To provide a comprehensive understanding of this application, the following descriptions include a plurality of specific details. This application may be alternatively implemented without using these details. In addition, to avoid confusing or blurring the focus of this application, some specific details are omitted from the descriptions. It should be noted that embodiments of this application and features in the embodiments may be mutually combined if they do not conflict with each other.

In addition, various operations are described as a plurality of discrete operations in a manner that is most helpful in understanding the illustrative embodiments. However, the described sequence should not be construed as implying that these operations need to depend on the sequence. Particularly, these operations do not need to be performed in a presented sequence. It should be noted that, in this specification, similar symbols and letters in the following accompanying drawings represent similar items. Therefore, once an item is defined in one accompanying drawing, the item does not need to be further defined or explained in the following accompanying drawings.

It should be understood that although terms such as "first" and "second" may be used herein to describe various features, these features should not be limited by these terms. These terms are merely used for distinction, and should not be understood as an indication or implication of relative importance. For example, without departing from the scope of the example embodiments, a first feature may be referred to as a second feature, and similarly, the second feature may be referred to as the first feature

In addition, the terms "contain", "have", and "include" are synonyms unless otherwise specified in the context. The phrase "A/B" indicates "A or B". The phrase "A and/or B" indicates "(A), (B), or (A and B)".

As used herein, the terms "module", "unit", and "apparatus" herein may be or include an application-specific integrated circuit (ASIC), an electronic circuit, a processor (for example, a shared processor, a dedicated processor, or a group processor) that executes one or more software or firmware programs and/or a memory (for example, a shared memory, a dedicated memory, or a group memory), a combined logic circuit, and/or another suitable component that provides the described functions; or may be an application-specific integrated circuit (ASIC), an electronic circuit, a processor (for example, a shared processor, a dedicated processor, or a group processor) that executes one or more software or firmware programs and/or a memory (for example, a shared memory, a dedicated memory, or a group memory), a combined logic circuit, and/or another appropriate component that provides the described functions.

It should be further stated that, in this application, the method and the procedure are numbered for ease of reference, instead of limiting a sequence. If there is a sequence between steps, refer to the textual description.

To make the objectives, technical solutions, and advantages of this application clearer, the following further describes the implementations of this application in detail with reference to the accompanying drawings.

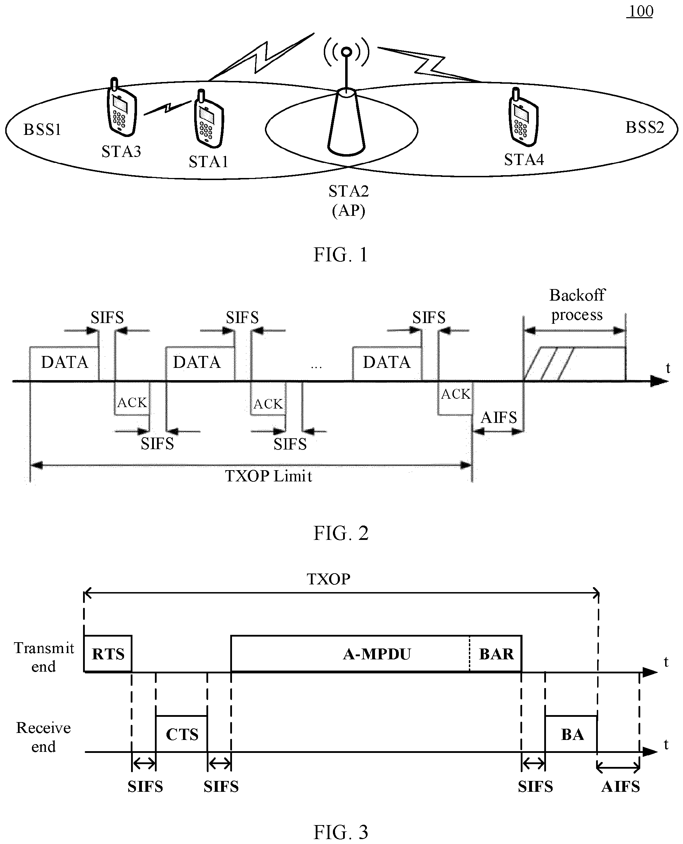

FIG. 1 is a schematic diagram of a wireless communication system according to this application. A wireless communication system 100 in the figure includes a first electronic device STA1, a second electronic device STA2, a third electronic device STA3, and a fourth electronic device STA4. The second electronic device STA2 is used as an access point (Access Point, AP), and may be communicatively connected to other devices. The first electronic device STA1 and the third electronic device STA3 can also be communicatively connected to each other. The fourth electronic device STA4 can be communicatively connected to the AP. That is, the first electronic device STA1, the second electronic device STA2, and the third electronic device STA3 form a basic service set (Basic Service Set, BSS) (BSS1), the second electronic device STA2 and the fourth electronic device STA4 form another BSS (BSS2), and signal coverage areas of the BSS1 and the BSS2 overlap. Certainly, a quantity of electronic devices included in the BSS shown in the figure is not limited to the quantity shown in FIG. 1. Instead, a quantity of stations that can be accommodated in one BSS at least partially depends on performance of an AP in the BSS.

In the wireless communication system 100 shown in FIG. 1, the fourth electronic device STA4 and each of the first electronic device STA1 and the third electronic device STA3 cannot directly receive information sent by each other. However, the fourth electronic device STA4 can receive information sent by the AP, that is, the fourth electronic device STA4 can receive information sent by the second electronic device STA2 serving as the AP of the BSS1. Therefore, the fourth electronic device STA4 is a hidden station for the first electronic device STA1 and the third electronic device STA3.

The first electronic device STA1, the third electronic device STA3, and the fourth electronic device STA4 need to preempt, by using a contention mechanism, a channel for communicating with the AP (the second electronic device STA2). When the first electronic device STA1 occupies the channel, the third electronic device STA3 and the fourth electronic device STA4 suspend channel contention (that is, remain silent). When the first electronic device STA1 occupies the channel to communicate with the second electronic device STA2, the third electronic device STA3 directly obtains, from information sent by the first electronic device STA1, information about time in which the first electronic device STA1 is to occupy the channel, to correct a network allocation vector (Network Allocation Vector, NAV) value of the third electronic device STA3 (the third electronic device STA3), to avoid sending information to the second electronic device STA2 during communication between the first electronic device STA1 and the second electronic device STA2. Generally, the NAV value may be set to control silent time of a station that does not preempt the channel, for example, indicate the third electronic device STA3 that does not preempt the channel to remain silent during communication between the first electronic device STA1 and the second electronic device STA2. The fourth electronic device STA4 may obtain, from information sent by the second electronic device STA2, the information about the time in which the first electronic device STA1 is to occupy the channel, that is, as a hidden station, the fourth electronic device STA4 can indirectly obtain the information about the time in which the first electronic device STA1 is to occupy the channel. The fourth electronic device STA4 may also modify an NAV value of the fourth electronic device STA4 by using the time information, to avoid sending information to the second electronic device STA2 during communication between the first electronic device STA1 and the second electronic device STA2.

In FIG. 1, examples of the first electronic device STA1, the third electronic device STA3, and the fourth electronic device STA4 include but are not limited to a portable or mobile device, a mobile phone, a personal digital assistant, a cellular phone, a handheld PC, a wearable device (for example, a smartwatch or a smart band), a portable media player, a handheld device, a navigation device, a server, a network device, a graphics device, a video game device, a set-top box, a laptop device, a virtual reality device and/or an augmented reality device, an Internet of things device, an industrial control device, a smart car, an in-vehicle infotainment device, a streaming media client device, an e-book, a reading device, a POS device, and another device. Examples of the second electronic device STA2 used as an AP include but are not limited to a wireless router, an in-vehicle communication module, a portable or mobile device, a mobile phone, a personal digital assistant, a handheld PC, a handheld device, a navigation device, a server, a network device, a graphics device, a video game device, a set-top box, a laptop device, a virtual reality device and/or an augmented reality device, an Internet of things device, an industrial control device, a smart car, an in-vehicle infotainment device, a streaming media client device, an e-book, an e-reading device, and another device.

According to the foregoing communication protocol, stations that do not preempt the channel suspend application for a use right of the channel in respective silent periods, to reduce interference on the AP (namely, the second electronic device STA2), thereby improving efficiency of communication between the AP and each electronic device.

FIG. 2 is a time sequence diagram of transmitting data and retransmitting data within a period of one transmission opportunity (Transmission OPportunity, TXOP) according to an automatic repeat request (Auto Request, ARQ) protocol in the conventional technology. A data frame sent by a transmit end or a data frame retransmitted by the transmit end is shown above a timeline, and an acknowledgement frame fed back by a receive end is shown below the timeline. After the transmit end obtains a transmission opportunity through contention by using a contention mechanism, the transmit end may continuously send data frames (including retransmission data frames) a plurality of times within duration of one TXOP, and the receive end acknowledges each data frame by using a check bit. If the check succeeds, it indicates that the data is correctly received. Otherwise, it indicates that received data is incorrect and the data frame needs to be retransmitted. The receive end feeds back an acknowledgement frame to the transmit end, where the acknowledgement frame includes an indication indicating whether the data frame needs to be retransmitted. If the frame includes no retransmission indication, it indicates that the data frame is correctly received. When the acknowledgement frame received by the transmit end includes a retransmission indication, the transmit end retransmits a corresponding data frame to the receive end until all data frames are correctly received. The retransmission indication is used to specify information that is in the data frame and that is related to a part of data that needs to be retransmitted. There is a protective interframe space between frames. In the figure, a short interframe space (Short Interframe Space, SIFS) and an aggregate interframe space (Arbitration Inter-Frame Space, AIFS) are separately used based on different locations of the space. In addition, the foregoing TXOP duration time is limited. For example, a limit value of the TXOP duration may be specified based on different service types. When duration of data transmission exceeds the limit value, the transmit end cannot continue to send data, and needs to exit a current transmission process and re-contend for a channel, to obtain a TXOP again. Data that is not fully transmitted continues to be transmitted within new TXOP duration.

In the solution shown in FIG. 2, a data frame (DATA) generally includes a MAC layer protocol data unit (MAC Protocol Data Unit, MPDU), and an acknowledgement frame corresponding to the data frame includes indication information indicating whether the data frame needs to be retransmitted, to implement automatic data retransmission. However, for the retransmission, a received incorrect data frame is discarded, and the data frame is totally retransmitted. In addition, the receive end needs to send an acknowledgement frame in each time of retransmission. As a result, channel utilization is not high, and a data throughput is limited.

FIG. 3 is a time sequence diagram of correctly receiving and sending data within duration of one TXOP according to a hybrid automatic repeat request (Hybrid Auto Request, HARQ) protocol in the conventional technology. HARQ is obtained by adding a forward error correction (Forward Error Correction, FEC) technology based on the automatic repeat request (Auto Request, ARQ) mechanism. In this way, the receive end can correct and decode received data within a specific range by using the error correction mechanism. This improves a data throughput of the system to some degree. For an error that cannot be corrected by using the error correction mechanism, the HARQ protocol further specifies a retransmission mechanism. Briefly, after receiving an incorrect data frame, the receive end does not discard the data frame, but further sends a retransmission request to the transmit end. After receiving the retransmission data frame, the receive end combines soft information of the data frames received twice, to improve a probability of correctly decoding the data frame. This avoids the disadvantage that the data throughput of the system is reduced because channel resources are occupied by a plurality of times of retransmission in the ARQ mechanism.

Specifically, after the transmit end obtains a channel between the transmit end and the receive end through contention, a time sequence of receiving and sending a data frame within duration of one TXOP is as follows: First, the transmit end sends a control frame RTS (Request To Send, request to send). After receiving the RTS frame, if the receive end is ready to receive data, the receive end sends a control frame CTS (Clear To Send, clear to send) serving as an acknowledgement. After receiving the CTS frame, the transmit end may send a packaged data packet (or may be referred to as a data frame). After receiving the data frame, the receive end replies with an acknowledgement frame to indicate whether the data frame is received and/or whether the received data frame is incorrect. Specifically, at the MAC layer, the packed data packet is a MAC layer protocol data unit (MAC Protocol Data Unit, MPDU). In a more recent IEEE 802.11 protocol, the data packet may also be an aggregate MPDU (Aggregate MPDU, A-MPDU). The A-MPDU may include at least one MPDU. Because the MPDU may include a plurality of service data frames, it is equivalent to that one A-MPDU includes a plurality of service data frames. To identify an end of the A-MPDU, a tail of the A-MPDU further includes a block acknowledgement request (Block Acknowledge Request, BAR). After receiving the BAR, the receive end replies with a block acknowledgement (Block Acknowledge, BA) frame. If the BA frame indicates that the data is correctly received, the current data transmission ends. If the BA frame indicates that the data is incorrectly received, a part of incorrect data needs to be retransmitted.

In the foregoing time sequence, duration of one TXOP is fixed and can be explicitly calculated. Transmission moments of the RTS frame, the CTS frame, the A-MPDU frame (data frame), and the BA frame shown in FIG. 3 all may be obtained through calculation based on a data amount in a frame and a network transmission speed, and duration of a short interframe space (Short Interframe Space, SIFS) used to avoid a collision between frames is also fixed. Therefore, in the time sequence shown in FIG. 3, the TXOP duration may be calculated. Based on the descriptions in FIG. 1, when the first electronic device STA1 occupies the channel, the third electronic device STA3 and the hidden fourth electronic device STA4 can directly or indirectly obtain information about the duration, so that the NAV values of the third electronic device STA3 and the fourth electronic device STA4 can be adjusted by using the information. For example, it is assumed that the first electronic device STA1 provides current TXOP duration as 2 ms, a current NAV value of the third electronic device STA3 is 3 ms, and a current NAV value of the fourth electronic device STA4 is 1 ms. In this case, after obtaining the information 2 ms provided by the first electronic device STA1, the third electronic device STA3 and the fourth electronic device STA4 compare 2 ms with the local NAV values. Because the NAV value of the third electronic device STA3 is 3 ms greater than 2 ms, the third electronic device STA3 reserves the local value, and the NAV is still 3 ms. Because the NAV value of the fourth electronic device STA4 is 1 ms less than 2 ms, the fourth electronic device STA4 adjusts the local NAV value to 2 ms. After adjustment, both the third electronic device STA3 and the fourth electronic device STA4 remain silent for sufficiently long time, to avoid sending a request/query frame to the AP during communication between the first electronic device STA1 and the AP.

In the retransmission mechanism shown in FIG. 3, a plurality of data frames shown in FIG. 2 are combined into one aggregate data frame. For example, a plurality of MPDUs are aggregated into one A-MPDU, and one data frame may include one A-MPDU. In this way, one A-MPDU is transmitted within duration of one TXOP, thereby reducing time of a plurality of interframe spaces, improving channel utilization, and improving a data throughput of the system.

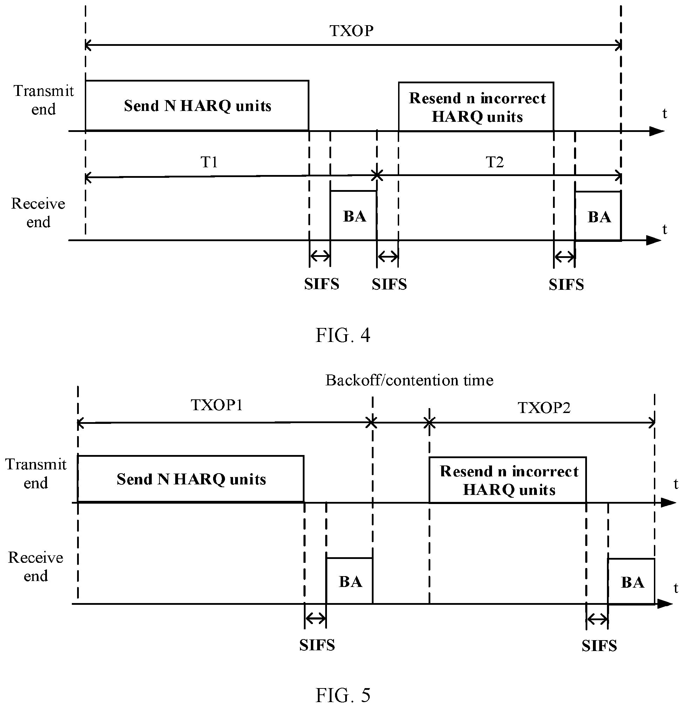

Based on the time sequence shown in FIG. 3, if the BA frame indicates that the data is incorrectly received, the data may be retransmitted based on the time sequence shown in FIG. 4 or FIG. 5.

FIG. 4 is a time sequence diagram of retransmitting data by reserving retransmission time in a TXOP according to a HARQ protocol in the conventional technology. The retransmission mechanism is as follows:

First, in a process of establishing a communication connection between the transmit end and the receive end, the following is agreed on or is specified based on another management frame: Duration of one TXOP includes duration T1 used for transmitting a data frame and duration T2 used for retransmitting data, where the duration T1 may be calculated based on a size of the data frame, and the duration T2 is a specified value that is not changed in a transmission process. Preferably, a data frame (for example, one A-MPDU) sent by the transmit end may be segmented into N HARQ units, and sequence numbers are assigned to the N HARQ units, so that a HARQ unit with a specified sequence number is retransmitted in a retransmission process.

After receiving the data frame including the N HARQ units, the receive end performs processing such as decoding and error correction on the data frame. If one HARQ unit still cannot be correctly decoded after error correction processing, the information is recorded in a corresponding field of an acknowledgement frame, to indicate that the HARQ unit needs to be retransmitted. After an SIFS, the receive end feeds back an acknowledgement frame (BA frame) to the transmit end, where the acknowledgement frame includes indication information of a HARQ unit that needs to be retransmitted.

The transmit end generates a retransmission data frame based on sequence number information of the HARQ unit specified in the acknowledgement frame. For example, if the acknowledgement frame indicates n incorrect HARQ units, the transmit end generates a retransmission data frame including the n incorrect HARQ units, and sends the retransmission data frame after one SIFS.

After receiving the retransmission data frame, the receive end performs processing such as decoding and error correction again. If the data is correctly received, the receive end feeds back an acknowledgement frame to the transmit end, where the acknowledgement frame includes indication information indicating that the data is correctly received. If the data is still not correctly received, the receive end may feed back an acknowledgement frame to the transmit end, where the acknowledgement frame includes indication information of a HARQ unit that needs to be retransmitted again. However, total time occupied by retransmitting the data frame should not exceed the duration T2. If the currently transmitted data frame is not correctly received after the time occupied by retransmitting the data exceeds the duration T2, the current data transmission needs to be exited, and the transmit end re-contends for the channel to continue to complete data transmission.

In addition, a person skilled in the art may understand that a maximum value of the TXOP duration (that is, T1+T2) is restricted by the foregoing limit value of the TXOP duration.

In the retransmission mechanism shown in FIG. 4, the duration T2 used to retransmit data is fixed. In this case, when data does not need to be retransmitted, the duration T2 is wasted. This reduces a data throughput. When time required to retransmit data exceeds the duration T2, the duration T2 does not meet a time requirement, and the transmit end further needs to re-contend for the channel to complete one time of complete data transmission. This also has a negative impact on a data throughput of the system.

FIG. 5 is a time sequence diagram of retransmitting data by re-contending for a channel according to a HARQ protocol in the conventional technology. The retransmission mechanism shown in FIG. 5 is simpler than the retransmission mechanism shown in FIG. 4. That is, the transmit end and the receive end do not reserve the duration T2 used for retransmission. Instead, after data is received once, regardless of whether the data is correctly received, both the transmit end and the receive end exit the current transmission opportunity. If determining that a received data frame includes an incorrect HARQ unit, the receive end feeds back related indication information to the transmit end by using an acknowledgement frame, and the transmit end needs to store the indication information or store a retransmission data frame generated based on the indication information, then re-contends for a channel, and retransmits the corresponding retransmission data frame within duration of another TXOP. This mechanism provides good consistency in the processing method, and has simple management logic. However, a specific requirement is imposed on data buffering capabilities of the transmit end and the receive end. In a large-throughput system, the transmit end and the receive end each need to have a large buffer to store data.

In addition, a person skilled in the art may understand that a maximum value of the TXOP duration is also restricted by the foregoing limit value of the TXOP duration.

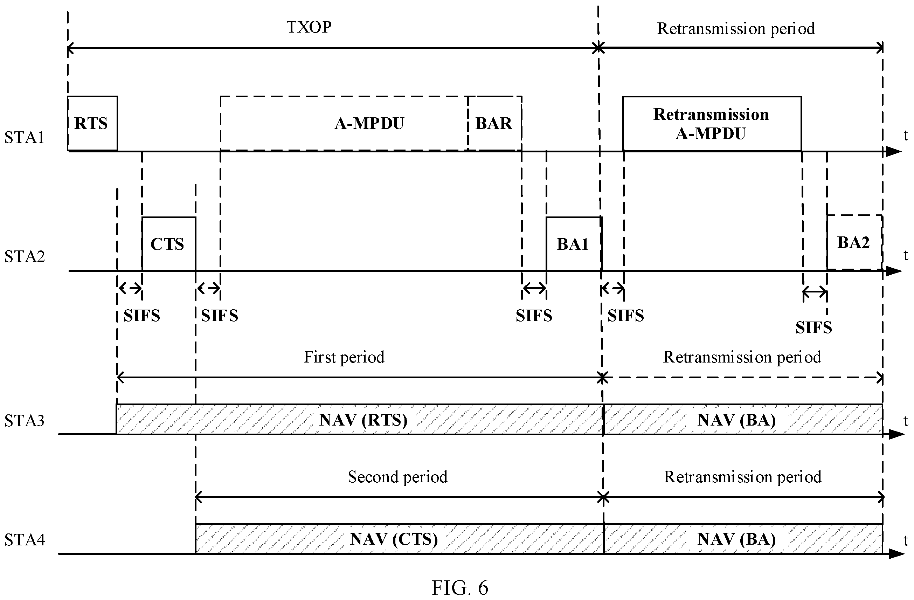

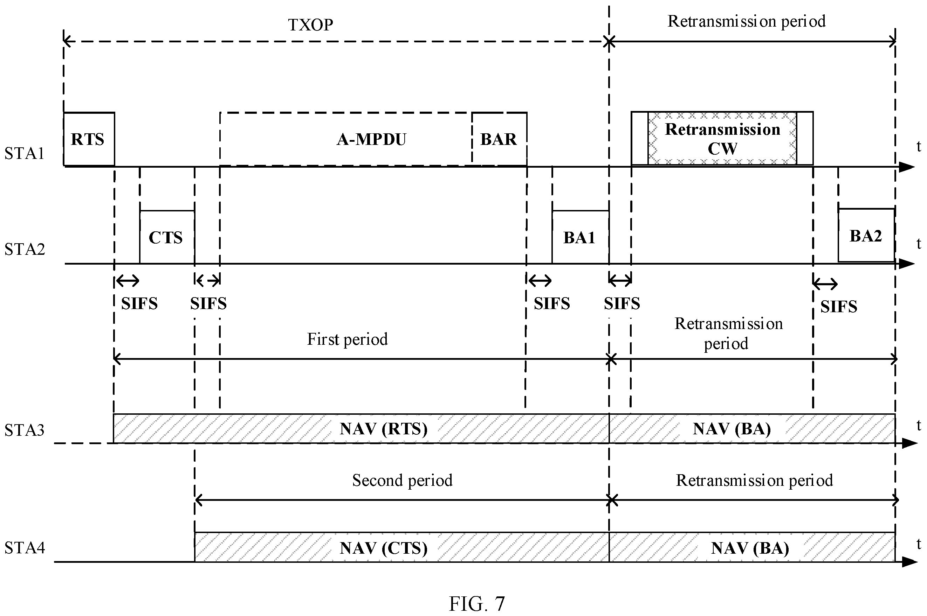

FIG. 6 and FIG. 7 are time sequence diagrams in two different retransmission modes. Retransmission means that when a data frame fails to be correctly received, the receive end requests the transmit end to retransmit the data frame or information related to correcting the data frame, that is, the transmit end sends a retransmission data frame to the receive end based on the request of the receive end, so that the receive end correctly receives the data frame. The foregoing two retransmission modes include a chase combining (Chase Combining, CC) mode and an incremental redundancy (Incremental Redundancy, IR) mode. The CC mode is a retransmission mode in which a retransmission data frame sent by the transmit end includes several segments of an original data frame, and the receive end combines a data frame received for the first time with the retransmission data frame to obtain a correct data frame. The IR mode is a retransmission mode in which a retransmission data frame sent by the transmit end includes a redundancy version used for error correction, and the receive end performs, based on the redundancy version, error correction on a data frame received for the first time, to obtain a correct data frame. A specific retransmission mode for use is agreed on in a process of establishing a communication connection between the first electronic device STA1 (the transmit end) and the second electronic device STA2 (the receive end) or is temporarily specified based on another management frame. In the two modes, NAV value control methods for the third electronic device STA3 and the fourth electronic device STA4 are basically the same.

FIG. 6 is a time sequence diagram of retransmitting data by dynamically prolonging TXOP duration in a chase combining (Chase Combining, CC) mode according to some embodiments of this application. In this embodiment, the second electronic device STA2 sends an acknowledgement frame (BA1) within the TXOP duration, to notify in advance a surrounding station (for example, the third electronic device STA3 and the fourth electronic device STA4) of a retransmission period to be occupied by retransmitting data. Therefore, the third electronic device STA3 and the fourth electronic device STA4 may adjust the local NAV values based on the retransmission period to continue to remain silent. In addition, the first electronic device STA1 may retransmit data to the second electronic device STA2 in the retransmission period immediately following the TXOP duration. This substantially implements an effect of dynamically prolonging the TXOP duration.

The process of dynamically prolonging the TXOP duration is as follows:

First, to obtain an opportunity (TXOP) of transmitting data to the AP (the second electronic device STA2), the first electronic device STA1 needs to first contend for a channel against the third electronic device STA3 and the fourth electronic device STA4. Specifically, the first electronic device STA1 performs clear channel assessment (Clear Channel Assessment, CCA) to determine whether the channel has been idle. When determining that duration in which the channel is idle reaches an arbitration interframe space (Arbitration Inter-Frame Space, AIFS), the first electronic device STA1 performs a backoff process, that is, the local NAV value starts to decrease with time until the NAV value decreases to 0.

Immediately after the backoff process (that is, the local NAV value decreases to 0), the first electronic device STA1 enters the TXOP duration in which the first electronic device STA1 transmits data. The first electronic device STA1 first sends an RTS frame to the second electronic device STA2, to provide a prompt that the first electronic device STA1 is ready to start to send data. A duration field (DuRation Field, DR field) field of the RTS frame indicates duration (a first period) required to complete current data transmission after sending of the RTS frame is completed. It can be learned from FIG. 6 that the first period may include time required by the second electronic device STA2 to send a CTS, time required by the first electronic device STA1 to send a data frame (A-MPDU1) and a BAR attached to the data frame, time required by the second electronic device STA2 to send an acknowledgement frame (BA1), and three interframe spaces (SIFS). The first period may be received by the third electronic device STA3 in a same BSS. If the third electronic device STA3 currently does not preempt the channel, the third electronic device STA3 needs to remain silent, and may compare the local NAV value with a value of the first period to determine whether the NAV value of the third electronic device STA3 needs to be updated, to implement an effect of remaining silent in the first period, that is, not occupying the channel in the first period for communication.

After receiving the RTS frame sent by the first electronic device STA1, the second electronic device STA2 sends a CTS frame after one SIFS, to provide the following prompt: The first electronic device STA1 may start data transmission, and the third electronic device STA3 and the fourth electronic device STA4 need to remain silent. A DR field of the CTS frame indicates duration (a second period) required to complete current data transmission after sending of the CTS frame is completed. It can be learned from FIG. 6 that the second period may include time required by the first electronic device STA1 to send a data frame (A-MPDU) and a BAR, time required by the second electronic device STA2 to send an acknowledgement frame (BA1), and time of two interframe spaces (SIFS). The second period may be received by the fourth electronic device STA4 in an adjacent BSS (for example, the BSS2) (that is, the fourth electronic device STA4 may receive the CTS frame sent by the second electronic device STA2). Because the fourth electronic device STA4 needs to remain silent, the fourth electronic device STA4 may compare the local NAV value with a value of the second period to determine whether the NAV value of the fourth electronic device STA4 needs to be updated, to implement an effect of remaining silent in the second period.

After receiving the CTS frame, the first electronic device STA1 starts to send a data frame (A-MPDU) after one SIFS. The data frame includes a plurality of data segments, and each data segment, as a basic form of retransmission data, has an identifier (for example, a sequence number). In a retransmission process, the sequence number is used to determine a specific part, of the data frame, to which data that needs to be retransmitted belongs. For example, in this embodiment, when the data frame is an A-MPDU, one data segment may be one MPDU, or may be a plurality of MPDUs, or even may be less than one MPDU (for example, a half MPDU). How to segment the data frame does not fall within the discussion scope of this application. Every MPDU/every plurality of MPDUs/every half MPDU may be uniquely indicated based on a sequence number thereof in the data frame.

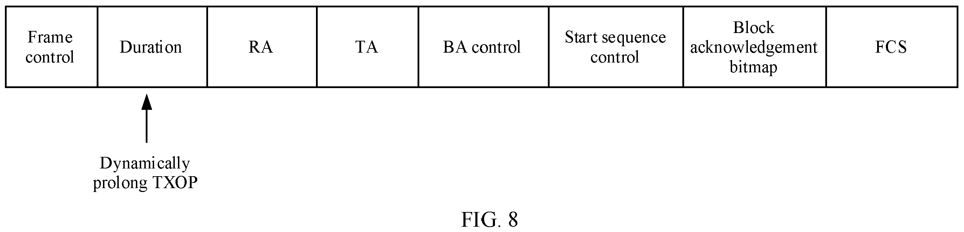

After receiving the data frame, the second electronic device STA2 performs decoding and error correction on the data frame. For a data segment whose error cannot be corrected, the second electronic device STA2 indicates, by using a corresponding location in a block acknowledgement bitmap (which is not shown in FIG. 6, but a specific structure of the acknowledgement frame is shown in FIG. 8, and references may be made to the descriptions in FIG. 8) of the acknowledgement frame BA1, that the data segment is incorrect and needs to be retransmitted. In this embodiment, the acknowledgement frame BA1 includes a block acknowledgement bitmap field (BA Bitmap Field) that may be used to store the block acknowledgement bitmap. Each bit in the block acknowledgement bitmap field corresponds to one data segment in the data frame. Two values "0" and " 1" of the bit may respectively indicate whether a data segment corresponding to the bit is correctly received (that is, whether the data segment needs to be retransmitted). For example, if the fifth data segment needs to be retransmitted, a location (for example, the fifth location) that is in the block acknowledgement bitmap and that corresponds to the fifth data segment is identified as "1", to indicate that the fifth data segment in the data frame (A-MPDU) needs to be retransmitted. A person skilled in the art may understand that the value may also indicate that another data segment in the data frame (A-MPDU) needs to be retransmitted.

In addition, the second electronic device STA2 further calculates duration (namely, a retransmission period) required to transmit information related to the fifth data segment. Specifically, a length of the data segment is agreed on in advance. Time required to transmit the data segment may be calculated based on a network speed. More simply, when one data segment is one MPDU, time to be occupied by the data segment that needs to be retransmitted may be calculated only by accumulating content of a DR field of an MPDU that is not correctly received. According to some embodiments of this application, the retransmission period may include time required to transmit a retransmission data frame (namely, a correct version of an incorrect data segment) between the first electronic device STA1 and the second electronic device STA2, a period required to transmit an acknowledgement frame (BA2) between the second electronic device STA2 and the first electronic device STA1 to determine whether the second electronic device STA2 correctly receives the retransmission data frame, and at least two interframe spaces (SIFS). A person skilled in the art should understand that the retransmission period may further include other time related to completing transmission of the retransmission data frame, for example, a control frame required to transmit a retransmission data segment. The second electronic device STA2 stores the retransmission period in a duration field of the acknowledgement frame (BA1).

After one SIFS, the second electronic device STA2 sends, to the first electronic device STA1, the acknowledgement frame BA1 including retransmission indication information. The retransmission indication information is used to at least indicate that at least a part of data (namely, the data segment that needs to be retransmitted) in the data frame needs to be retransmitted (for example, several data segments are specified by using the block acknowledgement bitmap) and indicate a retransmission period. The third electronic device STA3 and the fourth electronic device STA4 may read the BA1 and extract the retransmission period from the BA1, to adjust respective local NAV values. The third electronic device STA3 and the fourth electronic device STA4 each receive the BA1 before the local NAV value reaches 0 (that is, within the TXOP duration) and adjust the local NAV value again based on the retransmission period in the BA1. Therefore, the third electronic device STA1 and the fourth electronic device STA4 remain silent in the subsequent retransmission period. In this way, the first electronic device STA1 and the second electronic device STA2 may continue to occupy the channel in the subsequent retransmission period to transmit the retransmission data frame. In other words, based on the mechanism, the TXOP duration is substantially dynamically prolonged. A reason is that the prolonged period (namely, the retransmission period) is dynamically determined based on the data segment that needs to be retransmitted.

After receiving the acknowledgement frame BA1, the first electronic device STA1 extracts, based on the retransmission indication information (specifically, the retransmission indication information is stored in the block acknowledgement bitmap) in the acknowledgement frame BA1, data segments that need to be retransmitted and that is in the foregoing sent data frame A-MPDU1, and recombines correct versions of the data segments (that is, data segments that are not correctly received in the data frame A-MPDU1 transmitted within the TXOP duration and that need to be retransmitted) that need to be retransmitted into a data frame (a retransmission A-MPDU). After one SIFS, the first electronic device STA1 sends the data frame (the retransmission A-MPDU) to the second electronic device STA2. Because the embodiment shown in FIG. 6 is a retransmission method based on the CC mode, the data frame (the retransmission A-MPDU) sent by the first electronic device STA1 to the second electronic device STA2 in the retransmission period includes the correct version of the data segment that needs to be retransmitted instead of other data (for example, a redundancy version used to perform error correction on the data segment). In this embodiment, the data frame (the retransmission A-MPDU) includes the plurality of data segments that need to be retransmitted and that are indicated by the acknowledgement frame BA1.

After receiving the data frame (the retransmission A-MPDU), the second electronic device STA2 performs decoding and error correction again, and determines whether the data frame (the retransmission A-MPDU) still includes a data segment that needs to be retransmitted again. If further retransmission is not required, current data transmission is completed, and the channel may be released. If further retransmission is required, the second retransmission period needs to be calculated and stored in a DR field of the acknowledgement frame BA2, and information related to the data segment that needs to be retransmitted is indicated in a block acknowledgement bitmap field of the BA2, for example, an identifier of the data segment that needs to be retransmitted. The third electronic device STA3 and the fourth electronic device STA4 adjust respective NAV values again based on the second retransmission period.

In this embodiment, time occupied in an entire process of transmitting data between the first electronic device STA1 and the second electronic device STA2 is a sum of the TXOP duration and the retransmission period. In addition, there is no waiting time between data transmission and data retransmission. After receiving the acknowledgement frame including the retransmission indication, the first electronic device STA1 generates the retransmission data frame based on a sequence number of a data segment specified in the retransmission indication, and retransmits the data after one SIFS. This is equivalent to prolonging the original TXOP duration, and substantially implements a function of dynamically prolonging the TXOP duration. Dynamically prolonging the TXOP duration helps enhance time management, improve time utilization, and save more time for data transmission.

In this embodiment, because a plurality of MPDUs are aggregated into one A-MPDU, interframe spaces between the plurality of MPDUs are omitted in a data transmission process. Therefore, a data throughput per unit time is improved. In addition, because the retransmission period is dynamically added immediately following the TXOP duration, the original data frame and the retransmission data frame are continuously sent. This saves one channel contention process, shortens a time span for correctly receiving one data frame, and correspondingly reduces data buffering pressure of the data receive end and the data transmit end. In addition, the retransmission period in this embodiment is obtained through calculation based on a data amount of the data segment that needs to be retransmitted. This resolves a disadvantage in the conventional technology that preset retransmission time is not long enough or is excessively long.

For the third electronic device STA3 and the fourth electronic device STA4, because the third electronic device STA3 and the fourth electronic device STA4 can obtain the value of the retransmission period in the BA1 within the TXOP duration, the third electronic device STA3 and the fourth electronic device STA4 can continue to remain silent in the retransmission period of the first electronic device STA1, and cause no interference on the second electronic device STA2. This also improves efficiency of communication between the first electronic device STA1 and the second electronic device STA2 from another perspective.

In addition, a person skilled in the art may understand that a maximum value of the sum of the TXOP duration and the retransmission period is further restricted by the foregoing limit value of the TXOP duration.

FIG. 7 is a time sequence diagram of retransmitting data by dynamically prolonging TXOP duration in an incremental redundancy (Incremental Redundancy, IR) mode according to some embodiments of this application. Similar to the foregoing embodiment, in this embodiment, the third electronic device STA3 and the fourth electronic device STA4 may continue to remain silent. In addition, data is retransmitted in the retransmission period immediately following the TXOP duration. This substantially implements an effect of dynamically prolonging the TXOP duration. Different from the foregoing embodiment, in this embodiment, in the retransmission period, the first electronic device STA1 not only sends data to the second electronic device STA2, and may also send a sequence used to perform error correction on the data. In addition, the transmission is performed at a physical layer. Because a basic form of a retransmission frame is a CW (Code Word, code word) when transmission is performed at the physical layer, the retransmission frame shown in the figure is identified by a retransmission CW.

For example, in this embodiment, a data frame (A-MPDU) includes a plurality of data segments (for example, MPDUs). When sending the data frame, the transmit end buffers several redundancy versions (Redundancy Version, RV) corresponding to one data segment (for example, one MPDU) at the physical layer. Based on different framing manners of the physical layer and the MAC layer, the MPDU and the redundancy version (RV) appear different, but carry same information (data). An example in which four RV are provided is used. Each RV has an index, that is, an RV0, an RV1, an RV2, and an RV3. It may also be understood that each RV has a number, to indicate, in the acknowledgement frame, which RV needs to be retransmitted. The RV0 may be complete data corresponding to the MPDU, and the RV1 to the RV3 may be error-correcting code sequences used to perform error correction on the RV0. That is, if an MPDU received for the first time at the MAC layer is correct, it indicates that the RV0 at the physical layer is correctly received, and a retransmission process is not required. However, if it is determined that the MPDU received at the MAC layer is incorrect (including that an error cannot be corrected through cyclic redundancy check), it indicates that the RV0 at the physical layer is not correctly received, and the first electronic device STA1 needs to transmit an RV in the retransmission period. The second electronic device STA2 determines, based on a damage status of the MPDU, which RV needs to be transmitted, and indicates the RV in the acknowledgement frame. The second electronic device STA2 may specify, in the block acknowledgement bitmap field of the acknowledgement frame, the RV that needs to be transmitted during retransmission. For example, when four RV are provided, every two bits in the block acknowledgement bitmap indicate an RV of one MPDU (that is, the first group of two bits indicates the first MPDU in the A-MPDU, the second group of two bits indicates the second MPDU, ...). A bit combination "00" indicates that the RV0 needs to be transmitted in the retransmission period, "01" indicates that the RV1 needs to be transmitted in the retransmission period, "10" indicates that the RV2 needs to be transmitted in the retransmission period, and "11" indicates that the RV3 needs to be transmitted in the retransmission period.

In addition, the second electronic device STA2 further needs to calculate the retransmission period based on the determined RV Specifically, the retransmission period includes: time that is calculated based on a network speed and a length of the RV and that needs to be occupied to retransmit data, duration of one acknowledgement frame, and two interframe spaces. The second electronic device STA2 stores the retransmission period in a duration field of the acknowledgement frame.

In addition, a person skilled in the art may understand that a maximum value of the TXOP duration is still restricted by the foregoing limit value of the TXOP duration.

This embodiment has the advantages in the embodiment shown in FIG. 6. In addition, channel resource utilization can be improved because the data retransmission process is performed at the physical layer. Moreover, at the physical layer, data is transmitted by using a buffered codebook (Code Word, CW) as a basic form, so that inconsistency between retransmission content and content initially transmitted can be avoided. Furthermore, because the second electronic device STA2 determines, in a targeted manner after evaluating a damage degree of received data, a specific version of RV for transmission, a probability of correctly decoding the data frame is also increased. This is equivalent to improving a data throughput. In addition, when data is transmitted at the physical layer, a hidden node, namely, the fourth electronic device STA4, is further prevented from interfering with the system.

FIG. 8 is a schematic diagram of a frame structure of an acknowledgement frame (BA1, BA2) in FIG. 6 or FIG. 7 according to some embodiments of this application. The acknowledgement frame may include an ACK (Acknowledge, acknowledgement) frame, a BA (Block Acknowledge, block acknowledgement) frame, and the like based on different types of data frames. In this embodiment, the BA frame is used as an example.

A structure of the BA frame provided in this embodiment includes: a frame control field (Frame Control Field), a duration field (DuRation Field, DR Field), a receive address field (Receive Address Field, RA Field), a transmit address field (Transmit Address Field, TA Field), a BA control field (BA control Field), a start sequence control field (Sequence Control Field), a block acknowledgement bitmap field (BA Bitmap Field), and a frame check sequence (Frame Check Sequence, FCS).

The block acknowledgement bitmap field provides retransmission indication information. The retransmission indication information indicates a location of data that needs to be retransmitted in a data frame. For example, the data frame is segmented into a plurality of data segments, a sequence number is assigned to each data segment, and a bit (bit) in a block acknowledgement bitmap also has sequence information, for example, the 1st bit, the 2nd bit, ..., or the first group of bits, the second group of bits, .... The bits in the block acknowledgement bitmap are sequentially in a one-to-one correspondence with the sequence numbers of the data segments, and a state 0 or 1 of each bit/each group of bits is used to indicate whether a corresponding data segment is correctly received. If the corresponding data segment is not correctly received, it means that the data segment or information related to the data segment needs to be retransmitted. For example, in the embodiment shown in FIG. 6, a 1st bit corresponds to the first MPDU. If the 1st bit is 0, it indicates that the MPDU is correctly received, and the MPDU does not need to be retransmitted. If the 1st bit is 1, it indicates that the first MPDU is not correctly received, and the MPDU needs to be retransmitted. In the embodiment shown in FIG. 7, every two bits form a group of bits, and the first group of bits corresponds to the first MPDU. When a value of the first group of bits is 00 to 11, it indicates that the first MPDU is not correctly received, and a redundancy version used for error correction needs to be transmitted at the physical layer (for details, refer to the descriptions in FIG. 7), to perform error correction on a received data frame (A-MPDU). A specific redundancy version for transmission depends on a value of the group of bits. For example, when there are four redundancy versions, namely, the RV0 to the RV3, values 00 to 11 of the group of bits may sequentially indicate that the RV0 to the RV3 need to be transmitted. A person skilled in the art may know that, in some other embodiments, the block acknowledgement bitmap may also be stored in the BA control field (BA control Field) or the start sequence control field (Sequence Control Field), provided that the field can ensure that there are sufficient bits to record block acknowledgement bitmap information.

The DR field is used to store the value of the retransmission period obtained by dynamically prolonging the TXOP duration. Based on a data amount of the data that needs to be retransmitted and that is indicated by the block acknowledgement bitmap and a parameter such as a network transmission speed, duration required to retransmit the data that needs to be retransmitted or the information related to the data that needs to be retransmitted may be calculated.

In this embodiment, the receive end calculates the retransmission period, and stores the retransmission period in the DR field of the acknowledgement frame. When the receive end sends the acknowledgement frame, if an electronic device in a signal coverage area of the receive end may read the retransmission duration, the electronic device may adjust an NAV value of the electronic device based on the retransmission duration, to maintain silent for sufficiently long time, to avoid sending an interference message such as a management frame or a control frame to the receive end when the transmit end retransmits data.

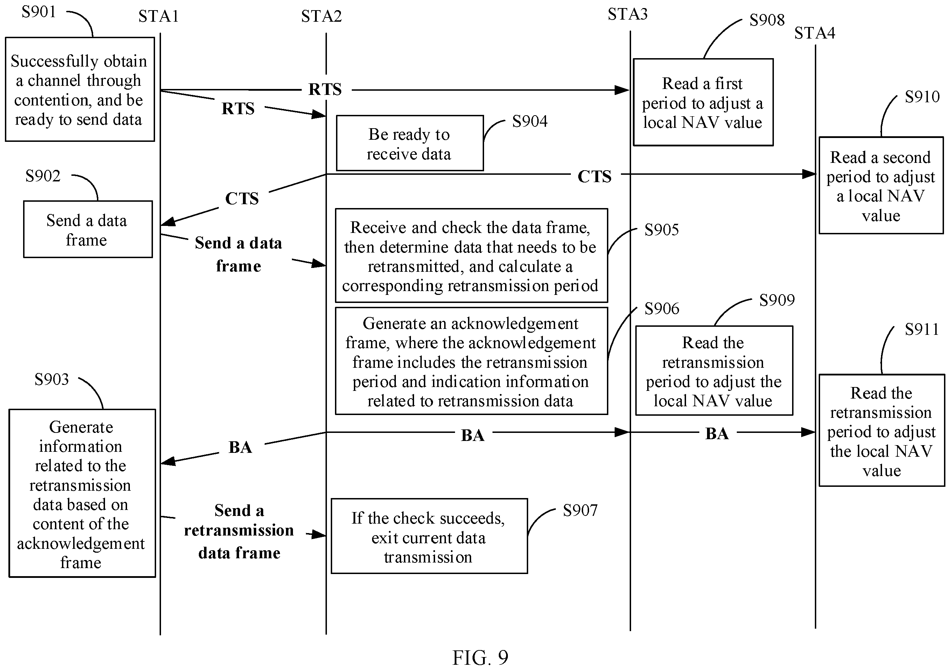

FIG. 9 is a schematic diagram of a working process for the first electronic device STA1, the second electronic device STA2, the third electronic device STA3, and the fourth electronic device STA4 in the wireless communication system 100 in FIG. 1 in a retransmission mechanism in which TXOP duration is dynamically prolonged according to some embodiments of this application. A data transmission process occurs between the first electronic device STA1 and the second electronic device STA2. The first electronic device STA1 sends a data frame/a retransmission data frame to the second electronic device STA2, then receives an acknowledgement frame from the second electronic device STA2, and exits data transmission/generates a retransmission data frame based on a retransmission indication in the acknowledgement frame. The third electronic device STA3 and the fourth electronic device STA4 listen to each frame (for example, an RTS, a CTS, and a BA) transmitted between the first electronic device STA1 and the second electronic device STA2, to obtain a value in a DR field from the frame, to adjust silent time (namely, NAV values) of the third electronic device STA3 and the fourth electronic device STA4. A detailed working process is as follows:

The first electronic device STA1 performs S901, that is, is ready to send data after successfully obtaining a channel through contention. An RTS frame is first sent, where the RTS frame is used to notify the second electronic device STA2 that a data frame from the first electronic device STA1 needs to be sent. In addition, a DR field included in the RTS frame indicates duration (a first period) required to complete current data transmission after sending of the RTS frame is completed. The first period may be used to indicate time in which the third electronic device STA3 remains silent. For specific composition of the first period, refer to the descriptions related to FIG. 6. After receiving the RTS frame, the third electronic device STA3 performs S908, that is, adjusts a local NAV value based on the first period indicated by the DR field of the RTS frame, to ensure that the third electronic device STA3 does not send data to the first electronic device STA1 or the second electronic device STA2 (remains silent) in a process in which data is transmitted between the first electronic device STA1 and the second electronic device STA2. For descriptions of how to adjust the NAV value, refer to the descriptions related to FIG. 3.

After receiving the RTS frame, the second electronic device STA2 performs S904, that is, sends a CTS frame to the first electronic device STA1, to notify the first electronic device STA1 that the first electronic device STA1 may send the data frame. In addition, a DR field included in the CTS frame indicates duration (a second period) required to complete current data transmission after sending of the CTS frame is completed. The second period may be used to indicate time in which the fourth electronic device STA4 remains silent. For specific composition of the first period, refer to the descriptions related to FIG. 6. After receiving the CTS frame, the fourth electronic device STA4 performs S910, that is, adjusts a local NAV value based on the second period indicated by the DR field of the CTS frame, to ensure that the fourth electronic device STA4 does not send data to the second electronic device STA2 (remains silent) in a process in which data is transmitted between the first electronic device STA1 and the second electronic device STA2. For descriptions of how to adjust the NAV value, refer to the descriptions related to FIG. 3.

After receiving the CTS frame, the first electronic device STA1 performs S902 to send the data frame (for example, the A-MPDU shown in FIG. 6). The data frame includes a plurality of data segments, and each data segment, as a basic form of retransmission data, has an identifier (for example, a sequence number). In a retransmission process, the sequence number is used to determine a specific part, of the data frame, to which data that needs to be retransmitted belongs.

Then, the second electronic device STA2 performs S905, that is, receives and checks the received data frame, to determine a data segment/data segments in the data frame that is/are not correctly received, that is, determine which part of data needs to be retransmitted. The second electronic device STA2 may calculate, based on a data amount of the determined part of data that needs to be retransmitted, a retransmission period that needs to be occupied to retransmit data. For a specific calculation method of the retransmission period, refer to the descriptions related to FIG. 1 and FIG. 6 to FIG. 8.

Then, the second electronic device STA2 performs S906, that is, generates an acknowledgement frame, and sends the acknowledgement frame. The second electronic device STA2 determines a value of a bit at a corresponding location in a block acknowledgement bitmap based on a sequence number of the data segment that is not correctly received (refer to the descriptions related to FIG. 6 and FIG. 7), and stores the calculated value of the retransmission period into a DR field, to generate an acknowledgement frame (for example, the BA1 in FIG. 6) corresponding to the data frame sent this time, and send the acknowledgement frame. After obtaining the acknowledgement frame (BA1) through listening, the third electronic device STA3 and the fourth electronic device STA4 respectively perform S909 and S911, to read the retransmission period in the acknowledgement frame, and adjust respective NAV values, to ensure that the third electronic device STA3 and the fourth electronic device STA4 remain silent in the retransmission period in which the first electronic device STA1 retransmits data to the second electronic device STA2.

After receiving the acknowledgement frame, the first electronic device STA1 performs S903, that is, generates information related to the retransmission data based on content in a block acknowledgement bitmap field in the acknowledgement frame, and sends the information to the second electronic device STA2. Specifically, in the CC mode shown in FIG. 6, the block acknowledgement bitmap field provides retransmission indication information. The retransmission indication information indicates a location of data that needs to be retransmitted in the data frame. The first electronic device STA1 finds, based on the retransmission indication information, at least one data segment that needs to be retransmitted, packages the at least one data segment into a retransmission data frame based on a MAC layer format, and sends the retransmission data frame to the second electronic device STA2. In the IR mode shown in FIG. 7, the retransmission indication information provided by the block acknowledgement bitmap field not only indicates a location of the data that needs to be retransmitted in the data frame, but also indicates a redundancy version that needs to be transmitted at a physical layer and that is used for error correction. The redundancy version for transmission is determined by the second electronic device STA2 based on a damage degree of the received data frame. For example, the damage degree of the data frame is divided into four levels, an RV3 is transmitted if the damage is minimal, and an RV0 is transmitted if the damage is maximal. The RV0 may be the data frame. For further content, refer to the descriptions related to FIG. 7.

After receiving the information related to the retransmission data, the second electronic device STA2 performs a check process in S907. If the check succeeds, the second electronic device STA2 may exit the current data transmission process. If the check fails, the foregoing process of S901 to S911 may be repeated to retransmit a part of data in the foregoing part of data again until the entire data frame is correctly received.

In this embodiment, an interaction relationship between several typical stations (an active station, an inactive station, and a hidden station) connected to one AP is mainly described. Mutual interference between a plurality of stations is resolved by processing the DR field by the first electronic device STA1 to the fourth electronic device STA4, to ensure that the active station is not interfered with by another station within TXOP duration. In addition, the block acknowledgement bitmap is used to resolve a problem of how to specify information related to retransmission in different transmission modes.

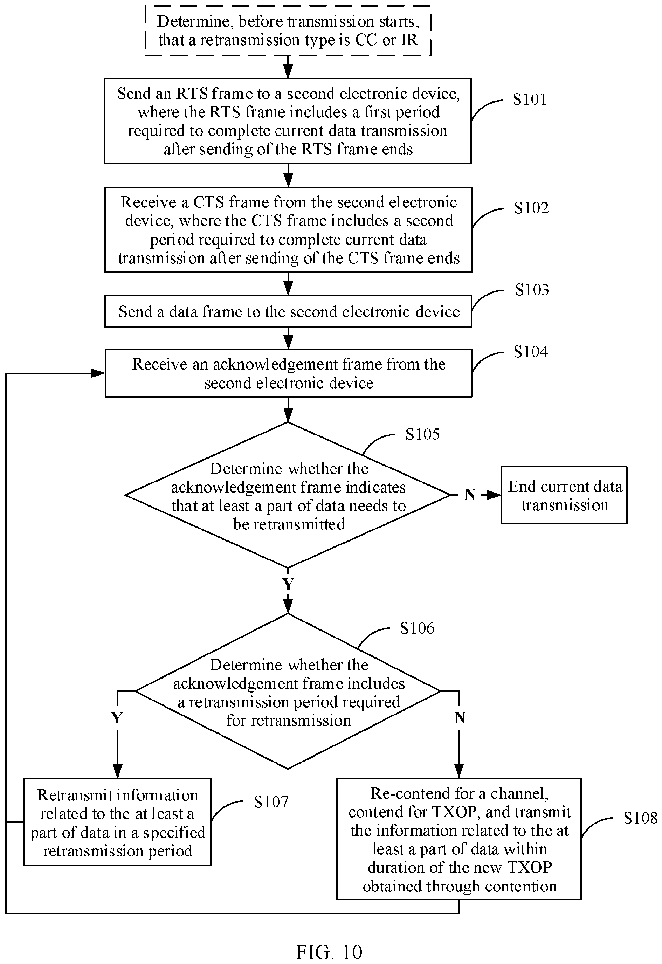

FIG. 10 is a flowchart of a retransmission method for dynamically prolonging a TXOP by a first electronic device STA1 according to some embodiments of this application. With reference to FIG. 9, the first electronic device STA1 is an active station, and currently occupies a use right of a channel. To improve a data throughput of the system, the first electronic device STA1 needs to quickly and correctly complete data transmission. A way to quickly and correctly complete transmission is to retransmit, in a timely manner, a part of data that is not correctly received.

First, corresponding to the two retransmission modes shown in FIG. 6 and FIG. 7, preferably, before data transmission starts, whether a data retransmission mode is the CC mode or the IR mode is agreed on by using an association frame or another management frame.

In step S101, the first electronic device STA1 first sends an RTS frame to a second electronic device STA2, to notify the second electronic device STA2 that the first electronic device STA1 is ready to start to transmit data. In addition, a DR field of the RTS frame includes a first period required to complete current data transmission after sending of the RTS frame ends. An end of the first period means that TXOP duration ends, that is, the first time period used to transmit a data frame ends. Another function of sending the first period is to notify an inactive station (for example, a third electronic device STA3) in a same BSS of how long the channel is still occupied by current data transmission. In this period, the third electronic device STA3 should not send information to the AP (the second electronic device STA2). The third electronic device STA3 remains silent in the first period, to avoid information loss caused because the AP responds to a plurality of STAs. Time in which the third electronic device STA3 remains silent is controlled by using a local NAV of the third electronic device STA3. For a specific process of controlling the NAV value, refer to the descriptions related to FIG. 3.

In step S102, the first electronic device STA1 receives a CTS frame from the second electronic device STA2, where the CTS frame is a response of the second electronic device STA2 to the RTS frame, and receiving the CTS frame means that the second electronic device STA2 is ready to receive data. In addition, a DR field of the CTS frame includes a second period required to complete current data transmission after sending of the CTS frame ends. The second period is used to notify a hidden station (for example, a fourth electronic device STA4) in an adjacent BSS of how long the channel is still occupied by current data transmission. In this period, the fourth electronic device STA4 should not send information to the AP (the second electronic device STA2). Same as above, the fourth electronic device STA4 remains silent in the second period, to avoid information loss caused because the AP responds to a plurality of STAs. For control of an NAV value of the fourth electronic device STA4, refer to the descriptions related to FIG. 3.

In step S103, the first electronic device STA1 sends a data frame to the second electronic device STA2. If the data frame can be correctly received, the TXOP ends, and the TXOP duration does not need to be prolonged. Otherwise, a retransmission data frame needs to be generated based on retransmission indication information in an acknowledgement frame. The retransmission indication information is used to at least indicate that at least a part of data in the data frame needs to be retransmitted.

In step S104, the first electronic device STA1 receives an acknowledgement frame from the second electronic device STA2, and then performs step S105. In step S105, the first electronic device STA1 determines, based on a block acknowledgement bitmap field in the acknowledgement frame, whether data needs to be retransmitted and which data needs to be retransmitted. For example, if a bit corresponding to a data segment in a block acknowledgement bitmap is 0 (CC mode) or 00 (IR mode), it indicates that the data segment is correctly received, and does not need to be retransmitted. If each data segment is correct, it indicates that the data frame is correctly received, and the first electronic device STA1 may exit current data transmission and release the channel. If one bit is not 0, it indicates that a corresponding data segment is incorrectly received, and the first electronic device STA1 needs to retransmit the data segment (CC mode) or a redundancy version related to the data segment (IR mode).

When it is determined, based on the block acknowledgement bitmap, that data needs to be retransmitted, step S106 is performed, that is, the first electronic device STA1 further determines whether the DR field includes a retransmission period required for data retransmission. Whether the DR field includes the retransmission period means whether a value in the DR field is 0 or non-zero. If the value in the DR field is 0, it indicates that time required for retransmission is not obtained through contention, and the channel needs to be obtained through re-contention after the channel is released, that is, step S108 is performed. In step S108, after the channel is obtained through contention, data is retransmitted within new TXOP duration obtained through contention. The process is similar to the time sequence shown in FIG. 5. However, the original and complete data frame is transmitted within the TXOP1 duration shown in FIG. 5. However, in this step, the retransmission data frame generated based on the acknowledgement frame in step S104 is transmitted.

If the value in the DR field is not 0, step S107 is performed, that is, information related to the at least a part of data is retransmitted in the retransmission period specified by the DR field. Specifically, based on whether the retransmission type is CC or IR, the data segment that needs to be retransmitted or the redundancy version specified by the block acknowledgement bitmap is retransmitted based on FIG. 6 and FIG. 7 respectively.

Further, if the retransmission data frame further includes a part of data that fails to be correctly received, an acknowledgement frame of the retransmission data frame may indicate that a part of data still needs to be retransmitted, so that S105 to S108 are performed again to correctly receive data.

In this embodiment, in a branch of S106 and S107, a process of re-contending for the channel is omitted between the retransmission period and the TXOP duration, and the first electronic device STA1 and the second electronic device STA2 do not need to exit the transmission process and then enter the transmission process, thereby actually prolonging the TXOP duration, and improving a data throughput of the system.

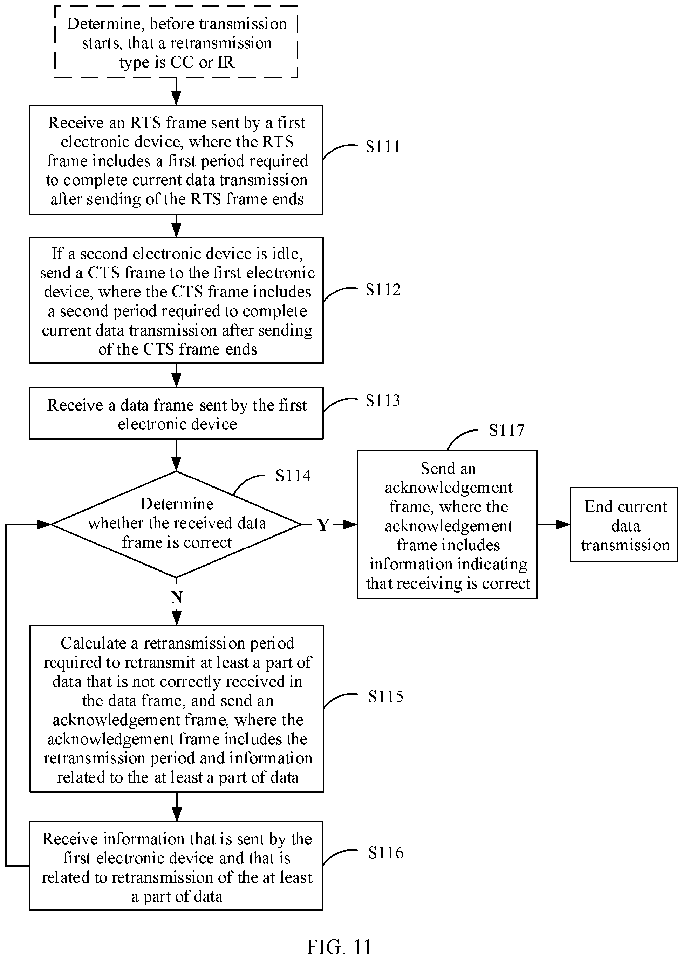

FIG. 11 is a flowchart of a retransmission method for dynamically prolonging a TXOP by a second electronic device STA2 according to some embodiments of this application. The process is a process in which the second electronic device interacts with the first electronic device in FIG. 10. As a receiver (a passive party) of data, the second electronic device STA2 responds to each received control frame and each received data frame.

In step S111, the second electronic device STA2 receives an RTS frame 0 sent by a first electronic device STA1.

In step S112, when the second electronic device STA2 is idle, the second electronic device STA2 replies with a CTS frame, to indicate that the second electronic device STA2 can receive data. After a DR field of the CTS frame is obtained by a STA4 through listening, the STA4 adjusts an NAV value.

In step S113, the second electronic device STA2 receives a data frame sent by the first electronic device STA1, and decodes the data frame.

In step S114, the second electronic device STA2 determines the decoded data frame, and if the received data frame is correct, performs step S117 to send an acknowledgement frame indicating that the data frame is correctly received. A value in a DR field of the acknowledgement frame is 0, and a value in a bitmap field indicates that all data segments are correctly received. Then, the second electronic device STA2 may end current data transmission.

If determining that the received data frame is incorrect, the second electronic device STA2 performs S115. Specifically, which data segment is incorrect is first determined. As described above, to reduce an amount of retransmission data, one data frame is generally segmented into a plurality of data segments, for example, segmented into a plurality of HARQ units. In a retransmission process, the data segment is used as a basic form for retransmission. The second electronic device STA2 collects statistics about a data segment/data segments that needs/need to be retransmitted (for details, refer to the descriptions in FIG. 6 and FIG. 7), and then calculates a retransmission period based on a data amount of an indicated data segment (for details, refer to the descriptions in FIG. 6 and FIG. 7). Then, the second electronic device STA2 indicates, in a block acknowledgement bitmap, a data segment that needs to be retransmitted, writes the retransmission period into a DR field, forms an acknowledgement frame, and sends the acknowledgement frame to the first electronic device STA1. In addition, both a third electronic device STA3 and the fourth electronic device STA4 may obtain the retransmission period through listening, and the retransmission period may be used to adjust respective NAV values.

In the retransmission type of the CC type and the retransmission type of the IR type, definitions of the block acknowledgement bitmap are different. For details, refer to the descriptions in FIG. 6 to FIG. 8.

Then, in step S116, the second electronic device STA2 waits for and receives a retransmission data frame generated by the first electronic device STA1 based on an indication of the acknowledgement frame, where the retransmission data frame includes a data segment that is not correctly received and that is indicated by the acknowledgement frame.

Subsequently, the second electronic device STA2 decodes and determines the retransmission data frame, that is, performs step S114. Steps S114 to S116 may be repeatedly performed (that is, data needs to be repeatedly retransmitted). When the TXOP limit value mentioned above is not exceeded, steps S114 to S 116 may be repeatedly performed until S117 is performed, that is, until the data frame is correctly received.

In this embodiment, with reference to FIG. 9, the second electronic device STA2 is an AP, and can be communicatively connected to stations in both the BSS1 and the BSS2 (refer to FIG. 1), and the acknowledgement frame sent by the second electronic device STA2 can be obtained by the stations in the BSS1 and the BSS2 through listening, thereby ensuring that an inactive station and a hidden station in a signal coverage area of the second electronic device STA2 do not interfere with data transmission/retransmission of an active station.

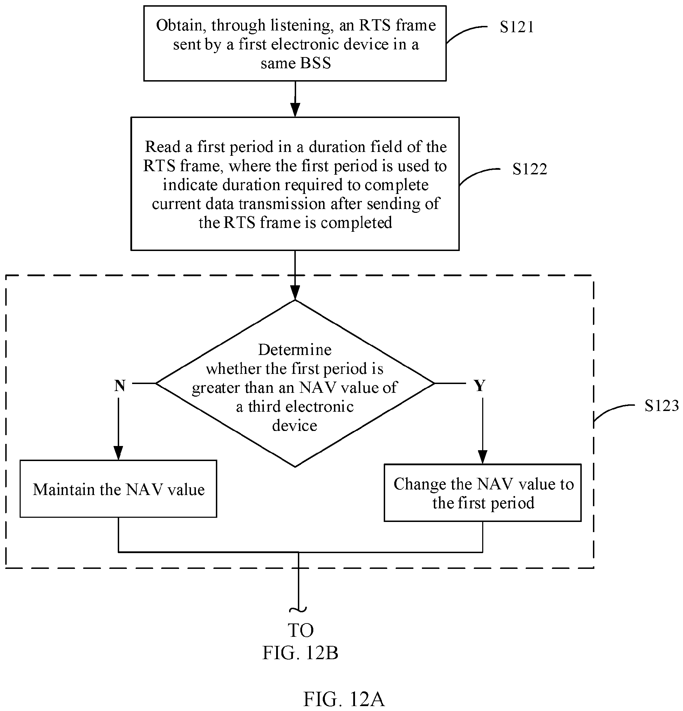

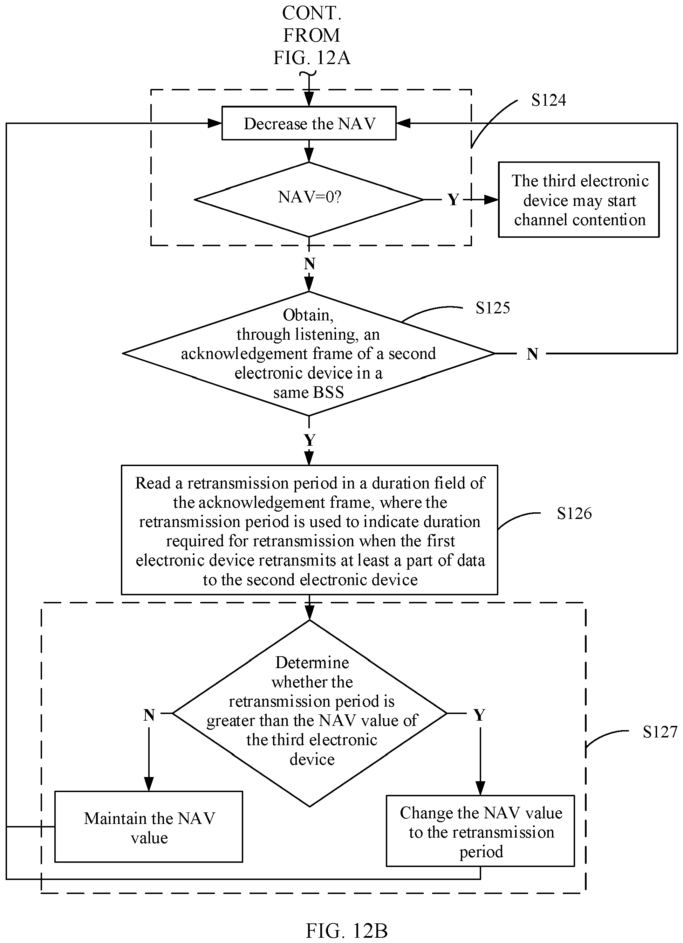

FIG. 12A and FIG. 12B are a flowchart of controlling, by a third electronic device, a local NAV value to dynamically prolong TXOP duration according to some embodiments of this application. The third electronic device STA3 is in a same BSS as a first electronic device STA1, and may simultaneously obtain frames sent by the first electronic device STA1 and a second electronic device STA2 through listening. Therefore, the third electronic device STA3 may start to correct an NAV value earlier than the fourth electronic device STA4.

In step S121, the third electronic device STA3 obtains, through listening, an RTS frame sent by the first electronic device STA1 to the second electronic device STA2, and then performs step S122 to read a DR field of the RTS. The DR field stores time, namely, a first period, required to complete current data transmission after sending of the RTS frame is completed.

In step S123, the third electronic device STA3 compares the first period with the local NAV value. If the first period is greater than the NAV value, it indicates that the time required for current data transmission is long, and the third electronic device STA3 updates the NAV value to a value of the first period, so that the third electronic device STA3 remains silent for sufficiently long time. If the first period is less than the NAV value, it indicates that the third electronic device STA3 originally needs to remain silent for longer time (which may depend on another interaction process), and does not need to update the NAV value by using a value of the first period. In this embodiment, the NAV value is used to control time in which the third electronic device STA3 remains silent. When the NAV value is not zero, the third electronic device STA3 remains silent, and should not send interference information such as a control frame or a data frame.

In step S 124, the third electronic device STA3 decreases the NAV value, and determines whether a new NAV value is equal to 0. If the NAV value is equal to 0, it means that the third electronic device STA3 may perform clear channel assessment (Clear Channel Assessment, CCA), to detect whether a channel is idle, that is, the third electronic device STA3 may start channel contention.

If the NAV value is not 0, the third electronic device STA3 performs step S125, that is, continues to listen to a frame in a communication system. When there is no new frame, the third electronic device STA3 returns to perform step S124. When obtaining, through listening, an acknowledgement frame sent by the second electronic device STA2, the third electronic device STA3 performs step S126.

In step S 126, the third electronic device STA3 reads a DR field of the acknowledgement frame, that is, reads a retransmission period.

Similar to step S123, in step S127, the third electronic device STA3 compares the retransmission period with the local NAV value, and selects a larger value as the NAV value, so that the third electronic device STA3 remains silent for sufficiently long time. Then, the third electronic device STA3 returns to perform step S 124.

Actually, in a period in which the third electronic device STA3 remains silent, the third electronic device STA3 listens to a frame (for example, a BA frame sent by the second electronic device STA2) in the BSS, to adjust some local parameters (for example, the NAV) in a timely manner. In addition, the third electronic device STA3 periodically decreases the NAV value and determines whether the NAV value is 0, to restore in a timely manner from a silent state to a state in which the third electronic device STA3 can participate in channel contention. Compared with the conventional technology, the third electronic device STA3 can obtain the retransmission period in a timely manner in a period in which the first electronic device STA1 and the second electronic device STA2 dynamically prolong the TXOP, to correspondingly adjust the NAV value, so that the third electronic device STA3 can remain silent after the TXOP of the first electronic device STA1 and the second electronic device STA2 is prolonged. This ensures that no interference is caused to the first electronic device STA1 and the second electronic device STA2 during data transmission between the first electronic device STA1 and the second electronic device STA2.

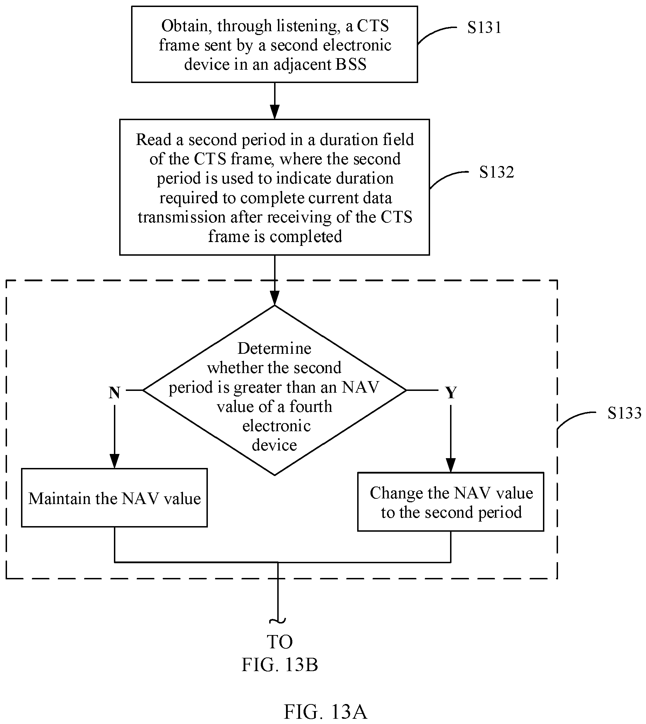

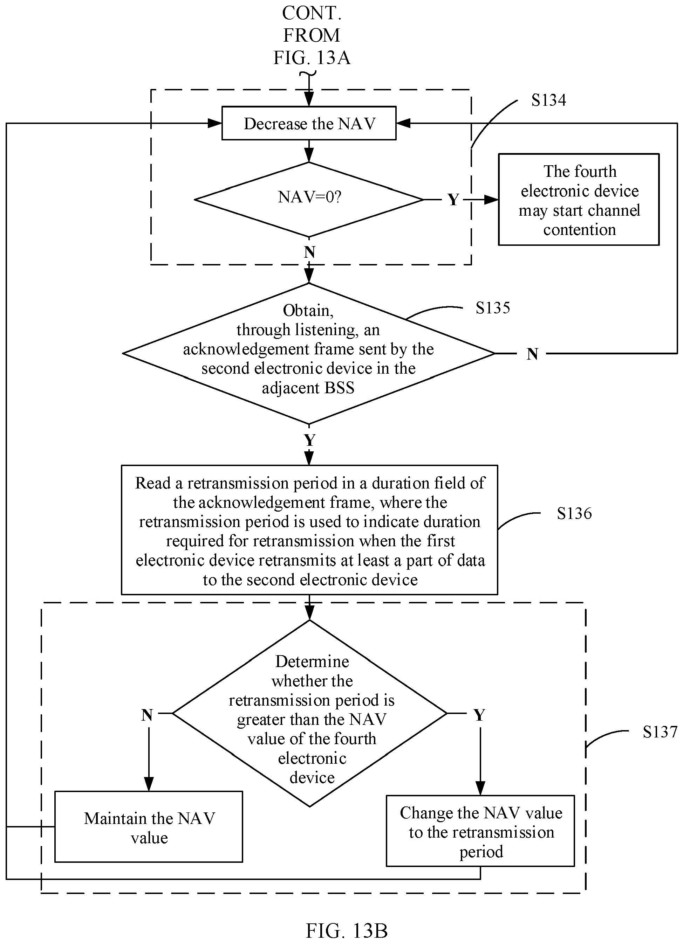

FIG. 13A and FIG. 13B are a flowchart of controlling, by a fourth electronic device, a local NAV value to dynamically prolong TXOP duration according to some embodiments of this application. Relative to a first electronic device STA1, the fourth electronic device STA4 is a hidden station of the first electronic device STA1, and the fourth electronic device STA4 can directly communicate only with a SAT2. To be precise, the fourth electronic device STA4 adjusts the NAV value so as not to interfere with the second electronic device STA2. However, in the embodiment shown in FIG. 12A and FIG. 12B, the third electronic device STA3 adjusts the NAV value so as not to interfere with the first electronic device STA1 and the second electronic device STA2.

In step S131, the fourth electronic device STA4 obtains, through listening, a CTS frame sent by the second electronic device STA2 to the first electronic device STA1, and then performs step S132 to read a DR field of the CTS. The DR field stores time, namely, a second period, required to complete current data transmission after sending of the CTS frame is completed.

In step S133, the fourth electronic device STA4 compares the second period with the local NAV value. If the second period is greater than the NAV value, it indicates that the time required for current data transmission is long, and the fourth electronic device STA4 updates the NAV value to a value of the second period, so that the fourth electronic device STA4 remains silent for sufficiently long time. If the second period is less than the NAV value, it indicates that the fourth electronic device STA4 originally needs to remain silent for longer time (which may depend on another interaction process), and does not need to update the NAV value by using a value of the second period. In this embodiment, the NAV value is used to control time in which the fourth electronic device STA4 remains silent. When the NAV value is not zero, the fourth electronic device STA4 remains silent, and should not send interference information such as a control frame or a data frame.

In step S134, the fourth electronic device STA4 decreases the NAV value, and determines whether a new NAV value is equal to 0. If the NAV value is equal to 0, it means that the fourth electronic device STA4 may perform clear channel assessment (Clear Channel Assessment, CCA), to detect whether a channel is idle, that is, the fourth electronic device STA4 may start channel contention.

If the NAV value is not 0, the fourth electronic device STA3 performs step S135, that is, continues to listen to a frame sent by the second electronic device STA2. When there is no new frame, the fourth electronic device STA4 returns to perform step S134. When obtaining, through listening, an acknowledgement frame sent by the second electronic device STA2, the fourth electronic device STA4 performs step S136.

In step S136, the fourth electronic device STA4 reads a DR field of the acknowledgement frame, that is, reads a retransmission period.

Similar to step S133, in step S137, the fourth electronic device STA4 compares the retransmission period with the local NAV value, and selects a larger value as the NAV value, so that the fourth electronic device STA4 remains silent for sufficiently long time. Then, the fourth electronic device STA4 returns to perform step S134.

Similar to the third electronic device STA3, actually, in a period in which the fourth electronic device STA4 remains silent, the fourth electronic device STA4 listens to a frame (for example, a BA frame sent by the second electronic device STA2) sent by the second electronic device STA2, to adjust some local parameters (for example, the NAV) in a timely manner. In addition, the fourth electronic device STA4 periodically decreases the NAV value and determines whether the NAV value is 0, to restore in a timely manner from a silent state to a state in which the fourth electronic device STA4 can participate in channel contention. Compared with the conventional technology, the fourth electronic device STA4 can obtain the retransmission period in a timely manner in a period in which the first electronic device STA1 and the second electronic device STA2 dynamically prolong the TXOP, to correspondingly adjust the NAV value, so that the fourth electronic device STA4 can remain silent after the TXOP of the first electronic device STA1 and the second electronic device STA2 is prolonged. This ensures that no interference is caused to the second electronic device STA2 during data transmission between the first electronic device STA1 and the second electronic device STA2.

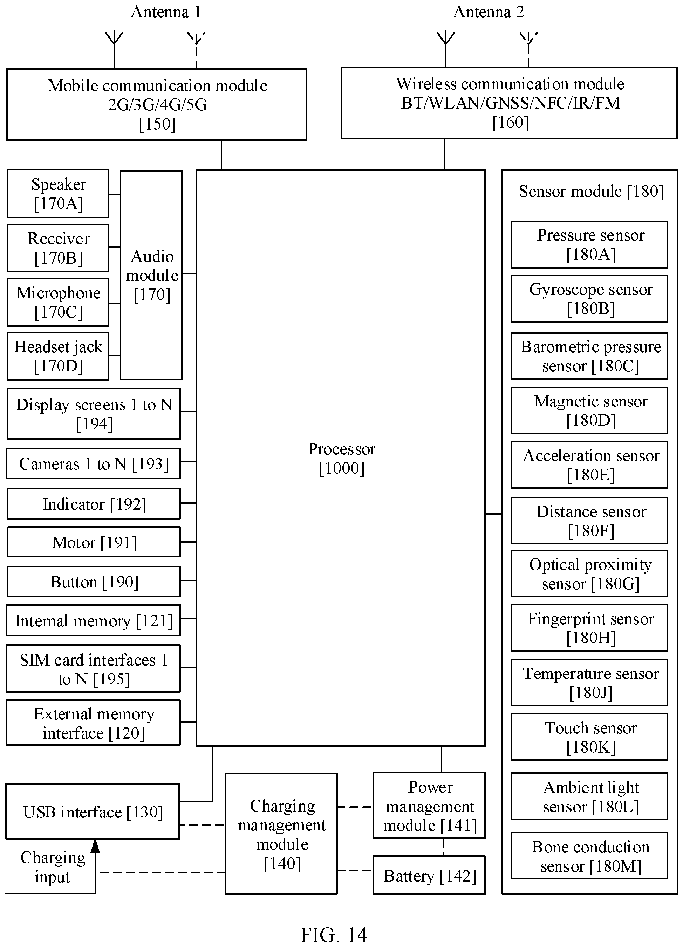

FIG. 14 is a schematic diagram of a system of an electronic device according to some embodiments of this application.

The electronic device may include a processor 1000, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, the structure illustrated in this embodiment of this application constitutes no specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 1000 may include one or more processing units. For example, the processor 1000 may include a central processing unit (Central Processing Unit, CPU), a micro control unit (Micro Control Unit, MCU), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like.

The modem is configured to: according to the IEEE 802.11 protocol, modulate a baseband signal that needs to be transmitted into a modulated signal that can be transmitted by using an antenna, and demodulate a signal received by the antenna into a baseband signal that can be processed by a processor of the electronic device. Different processing units may be independent components, or may be integrated into one or more processors.

The processor may generate an operation control signal based on an instruction operation code and a time sequence signal, to complete control of instruction reading and instruction execution.

A memory may be further disposed in the processor 1000, and is configured to store instructions and data. In some embodiments, the memory in the processor 1000 is a cache memory. The memory may store instructions or data that have or has been used or cyclically used by the processor 1000. If the processor 1000 needs to use the instructions or the data again, the processor may directly invoke the instructions or the data from the memory. This avoids repeated access, and reduces waiting time of the processor 1000, thereby improving system efficiency.

In some embodiments, the processor 1000 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and a subscriber identity module (subscriber identity module, SIM) interface.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G, 3G, 4G, and 5G applied to the electronic device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 1000. In some embodiments, at least some functional modules of the mobile communication module 150 may be disposed in a same component as at least some modules of the processor 1000. As shown in FIG. 5, the NAS layer, the RRC layer, and the PHY layer according to the embodiments of this application may be disposed as functional modules in the mobile communication module 150.

The modem processor may include a modulator and a demodulator. The modulator is configured to modulate a to-be-sent low-frequency baseband signal into an intermediate/highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A or the receiver 170B), or displays an image or a video by using the display screen 194. In some embodiments, the modem processor may be an independent component. In some other embodiments, the modem processor may be independent of the processor 1000, and is disposed in a same component as the mobile communication module 150 or another functional module.

In some embodiments, the antenna 1 and the mobile communication module 150 of the electronic device are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like.

The external memory interface 120 may be configured to connect to an external memory card, for example, a micro SD card, to expand a storage capability of the electronic device. The external memory card communicates with the processor 1000 through the external memory interface 120, to implement a data storage function, for example, to store files such as music or a video into the external memory card. In this embodiment of this application, a cell search parameter table may be stored in the external memory card connected by using the external memory interface 120.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device. In addition, the internal memory 121 may include a high-speed random access memory, and may further include a non-volatile memory, such as at least one magnetic disk storage device, a flash memory device, or a universal flash storage (universal flash storage, UFS). The processor 1000 runs the instructions stored in the internal memory 121 and/or the instructions stored in the memory disposed in the processor, to perform various function applications and data processing of the electronic device. In this embodiment of this application, the internal memory 121 may be configured to store the cell search parameter table, and the processor 1000 may be configured to perform the foregoing methods shown in FIG. 3 and FIG. 4.

The SIM card interface 195 is configured to connect to a SIM card. The SIM card may be inserted into the SIM card interface 195 or removed from the SIM card interface 195, to be in contact with and separated from the electronic device. The electronic device may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. Types of the plurality of cards may be the same or different. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device. In this embodiment of this application, information about a wireless communication network such as a PLMN may be stored in the SIM card.

All method implementations of this application may be implemented by software, a magnetic member, firmware, or the like.

Program code may be used to input instructions, to perform functions described in this specification and generate output information. The output information may be used in one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programmatic language or an object-oriented programming language, to communicate with the processing system. When necessary, the program code may alternatively be implemented by using an assembly language or a machine language. Actually, the mechanism described in this specification is not limited to a scope of any particular programming language. In any case, the language may be a compiled language or an interpreted language.

One or more aspects of at least one embodiment may be implemented by using representative instructions stored in a computer-readable storage medium. The instructions represent various logic in a processor, and when the instructions are read by a machine, the machine acts on the logic for performing the technologies described in this specification. These representations referred to as "IP cores" may be stored in a tangible computer-readable storage medium, and provided for a plurality of customers or production facilities for loading into a manufacturing machine that actually manufactures the logic or the processor.

Although the descriptions of this application are presented in conjunction with preferred embodiments, this does not mean that features of this application are limited only to the implementations. On the contrary, a purpose of describing the present invention in conjunction with the implementations is to cover other options or modifications that may be derived based on the claims of this application. To provide a comprehensive understanding of this application, the following descriptions include a plurality of specific details. This application may be alternatively implemented without using these details. In addition, to avoid confusing or blurring the focus of this application, some specific details are omitted from the descriptions. It should be noted that embodiments of this application and features in the embodiments may be mutually combined if they do not conflict with each other.

In addition, various operations are described as a plurality of discrete operations in a manner that is most helpful in understanding the illustrative embodiments. However, the described sequence should not be construed as implying that these operations need to depend on the sequence. Particularly, these operations do not need to be performed in a presented sequence.

As used herein, the term "module" or "unit" may mean, be, or include: an application-specific integrated circuit (ASIC), an electronic circuit, a processor (a shared processor, a dedicated processor, or a group processor) that executes one or more software or firmware programs and/or a memory, a combined logic circuit, and/or another suitable component that provides the described functions.

In the accompanying drawings, some structure or method features may be shown in a particular arrangement and/or order. However, it should be understood that the particular arrangement and/or order may not be required. In some embodiments, these features may be arranged in a manner and/or order different from that shown in the illustrative accompanying drawings. In addition, inclusion of the structure or method features in a particular figure does not imply that the features are required in all embodiments, and in some embodiments, these features may not be included or may be combined with other features.

Various embodiments of the mechanisms disclosed in this application may be implemented by hardware, software, firmware, or a combination of these implementation methods. Embodiments of this application may be implemented as a computer program or program code executed on a programmable system. The programmable system includes a plurality of processors, a storage system (including volatile and non-volatile memories and/or a storage element), a plurality of input devices, and a plurality of output devices.

Program code may be used to input instructions, to perform functions described in this application and generate output information. The output information may be used in one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programmatic language or an object-oriented programming language, to communicate with the processing system. When necessary, the program code may alternatively be implemented by using an assembly language or a machine language. Actually, the mechanism described in this application is not limited to a scope of any particular programming language. In any case, the language may be a compiled language or an interpreted language.

In some cases, the disclosed embodiments may be implemented by hardware, firmware, software, or any combination thereof. In some cases, one or more aspects of at least some embodiments may be implemented by using representative instructions stored in a computer-readable storage medium. The instructions represent various logic in a processor, and when the instructions are read by a machine, the machine acts on the logic for performing the technologies described in this application. These representations referred to as "IP cores" may be stored in a tangible computer-readable storage medium, and provided for a plurality of customers or production facilities for loading into a manufacturing machine that actually manufactures the logic or the processor.

The computer-readable storage medium may include but is not limited to a non-transient tangible arrangement of an article manufactured or formed by a machine or a device, including a storage medium, for example, a hard disk and any other type of disk, including a floppy disk, a compact disc, a compact disc read-only memory (CD-ROM), a compact disc rewritable (CD-RW), and a magneto-optical disc; a semiconductor device, for example, a read-only memory (ROM), a random access memory (RAM) such as a dynamic random access memory (DRAM) and a static random access memory (SRAM), an erasable programmable read-only memory (EPROM), a flash memory, and an electrically erasable programmable read-only memory (EEPROM); a phase change memory (PCM); a magnetic card or an optical card; or any other type of medium suitable to store electronic instructions.

Therefore, various embodiments of this application further include a non-transient computer-readable storage medium. The medium includes instructions or design data, for example, a hardware description language (HDL) that defines a structure, a circuit, an apparatus, a processor, and/or a system feature described in this application.

## Claims

1. A data retransmission method for a first electronic device, comprising:
sending a data frame to a second electronic device and receiving an acknowledgement frame from the second electronic device within transmission opportunity (Transmission OPportunity, TXOP) duration, wherein the acknowledgement frame comprises first acknowledgement information; and
when the first acknowledgement information indicates that at least a part of data in the data frame needs to be retransmitted and indicates a retransmission period required to complete the retransmission, retransmitting information related to the at least a part of data to the second electronic device in the retransmission period.

2. The method according to claim 1, wherein the transmission opportunity duration is adjacent to the retransmission period.

3. The method according to either of claims 1 and 2, wherein the transmission opportunity duration ends when the first electronic device completes receiving of the first acknowledgement information from the second electronic device, and the retransmission period starts when the first electronic device receives the first acknowledgement information from the second electronic device.

4. The method according to any one of claims 1 to 3, wherein the information related to the at least a part of data comprises at least the at least a part of data or a redundancy version of the at least a part of data.

5. The method according to any one of claims 1 to 4, wherein the retransmitting information related to the at least a part of data to the second electronic device in the retransmission period comprises:
sending the information related to the at least a part of data to the second electronic device since a start moment of the retransmission period and after at least one interframe space.

6. The method according to any one of claims 1 to 5, wherein the retransmission period comprises:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

7. The method according to any one of claims 1 to 6, wherein the first acknowledgement information is comprised in a first block acknowledgement (Block Acknowledgement, BA) frame that complies with the IEEE 802.11 standard.

8. The method according to claim 7, wherein the retransmission period is comprised in a duration field of the first block acknowledgement frame.

9. The method according to either of claims 7 and 8, wherein the first block acknowledgement frame comprises indication information used to specify the at least a part of data, or indication information used to specify the redundancy version (Redundancy Version, RV) of the at least a part of data.

10. A data retransmission method for a second electronic device, comprising:
receiving a data frame from a first electronic device within transmission opportunity (Transmission OPportunity, TXOP) duration;
when determining that at least a part of data in the data frame needs to be retransmitted, calculating a retransmission period required to complete the retransmission;
sending an acknowledgement frame to the first electronic device, wherein the acknowledgement frame comprises first acknowledgement information to indicate that the at least a part of data needs to be retransmitted and indicate the retransmission period; and
receiving, in the retransmission period, information that is related to the at least a part of data and that is from the first electronic device.

11. The method according to claim 10, wherein the transmission opportunity duration is adjacent to the retransmission period.

12. The method according to either of claims 10 and 11, wherein the transmission opportunity duration ends when the first electronic device receives the first acknowledgement information from the second electronic device, and the retransmission period starts when the first electronic device receives the first acknowledgement information from the second electronic device.

13. The method according to any one of claims 10 to 12, wherein the information related to the at least a part of data comprises at least the at least a part of data or a redundancy version of the at least a part of data.

14. The method according to any one of claims 10 to 13, wherein the receiving, in the retransmission period, information that is related to the at least a part of data and that is from the first electronic device comprises:
receiving, since a start moment of the retransmission period and after at least one interframe space, the information that is related to the at least a part of data and that is from the first electronic device.

15. The method according to any one of claims 10 to 14, wherein the retransmission period comprises:
duration required for the second electronic device to receive the information that is related to the at least a part of data and that is sent by the first electronic device;
duration required for the second electronic device to send second acknowledgement information to the first electronic device based on the information that is related to the at least a part of data and that is from the first electronic device; and
at least two interframe spaces.

16. The method according to any one of claims 10 to 15, wherein the first acknowledgement information is comprised in a first block acknowledgement (Block Acknowledgement, BA) frame that complies with the IEEE 802.11 standard.

17. The method according to claim 16, wherein the retransmission period is comprised in a duration field of the first block acknowledgement frame.

18. A network allocation vector (Network Allocation Vector, NAV) value control method for a third electronic device, comprising:
receiving an RTS (Request to Send, request to send) from a first electronic device, and comparing a first period in a duration field of the RTS with an NAV value of the third electronic device;
updating the NAV value to the first period when the first period is greater than the NAV value;
receiving an acknowledgement frame from a second electronic device, wherein the acknowledgement frame comprises first acknowledgement information; and
when the first acknowledgement information indicates that at least a part of data in a data frame sent by the first electronic device to the second electronic device needs to be retransmitted and indicates a retransmission period required to complete the retransmission, comparing the retransmission period with the NAV value, and updating the NAV value to the retransmission period when the retransmission period is greater than the NAV value.

19. The method according to claim 18, wherein the first acknowledgement information is comprised in a first block acknowledgement (Block Acknowledgement, BA) frame that complies with the IEEE 802.11 standard, and the retransmission period is comprised in a duration field of the first block acknowledgement frame.

20. The method according to either of claims 18 and 19, wherein the retransmission period comprises:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

21. The method according to any one of claims 18 to 20, wherein the first period comprises a period required, after RTS transmission, for the first electronic device to complete sending of the data frame to the second electronic device and for the second electronic device to complete sending of the first acknowledgement information to the first electronic device.

22. A network allocation vector (Network Allocation Vector, NAV) value control method for a fourth electronic device, comprising:
receiving a CTS (Clear to Send, clear to send) from a second electronic device, and comparing a second period in a duration field of the CTS with an NAV value of the fourth electronic device;
updating the NAV value to the second period when the second period is greater than the NAV value;
receiving an acknowledgement frame from the second electronic device, wherein the acknowledgement frame comprises first acknowledgement information; and
when the first acknowledgement information indicates that at least a part of data in a data frame sent by a first electronic device to the second electronic device needs to be retransmitted and indicates a retransmission period required to complete the retransmission, comparing the retransmission period with the NAV value, and updating the NAV value to the retransmission period when the retransmission period is greater than the NAV value.

23. The method according to claim 22, wherein the first acknowledgement information is comprised in a first block acknowledgement (Block Acknowledgement, BA) frame that complies with the IEEE 802.11 standard, and the retransmission period is comprised in a duration field of the first block acknowledgement frame.

24. The method according to either of claims 22 and 23, wherein the retransmission period comprises:
duration required for the first electronic device to send information related to the at least a part of data to the second electronic device;
duration required for the second electronic device to send second acknowledgement information to the first electronic device based on the information that is related to the at least a part of data and that is from the first electronic device; and
at least two interframe spaces.

25. The method according to any one of claims 22 to 24, wherein the second period comprises a period required, after CTS transmission, for the first electronic device to complete sending of the data frame to the second electronic device and for the second electronic device to complete sending of the first acknowledgement information to the first electronic device.

26. A first electronic device, comprising a memory and a processor, wherein
the memory is configured to store instructions for execution by one or more processors; and
the processor is one of processors of the electronic device, and is configured to perform the method according to any one of claims 1 to 9.

27. A second electronic device, comprising a memory and a processor, wherein
the memory is configured to store instructions for execution by one or more processors; and
the processor is one of processors of the electronic device, and is configured to perform the method according to any one of claims 10 to 17.

28. A third electronic device, comprising a memory and a processor, wherein
the memory is configured to store instructions for execution by one or more processors; and
the processor is one of processors of the electronic device, and is configured to perform the method according to any one of claims 18 to 21.

29. A fourth electronic device, comprising a memory and a processor, wherein
the memory is configured to store instructions for execution by one or more processors; and
the processor is one of processors of the electronic device, and is configured to perform the method according to any one of claims 22 to 25.

30. A computer-readable storage medium, wherein the storage medium is configured to store computer instructions, and when the computer instructions are executed, the method according to any one of claims 1 to 25 is implemented.
